# EUROPEAN PATENT APPLICATION

(11) **EP 4 842 098 A1**
(43) Date of publication of application: **18.11.2026**
(21) Application number: 24916056.5
(22) Date of filing: 11.01.2024
(51) Int. Cl.: H04W 72/044

(54) **INFORMATION REPORTING METHODS, AND DEVICES AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Hersina, Günter
(86) International application number: PCT/CN2024/071899
(87) International publication number: WO 2025/147983

(57) **Abstract**

The present disclosure relates to information reporting methods, and devices and a storage medium. An information reporting method comprises: receiving first information configured by a network device, the first information at least comprising a plurality of channel status informationreference signal (CSI-RS) resources: on the basis of the plurality of CSI-RS resources, performing measurement to obtain a plurality of measurement results: and reporting second information to the network device, the second information being used for indicating the plurality of measurement results. Thus, a terminal device can feed back the plurality of measurement results in one go, thereby reducing feedback overheads of the terminal device while guaranteeing system performance.

## Description

### FIELD

The present disclosure relates to the field of communication technologies, and more particularly to an information reporting method, a device and a storage medium.

### BACKGROUND

In a wireless communication system, an antenna scale is expanded by increasing the quantity of antenna ports to improve system efficiency or enhance coverage. As the quantity of antenna ports increases, the quantity of users accessing the network also increases. Accordingly, the network requires the terminal to feed back more channel state information-reference signal (CSI-RS) resource indicator (CRI), rank indicator (RI), channel quality indicator (CQI) and/or precoding matrix indicator (PMI) for multi-user scheduling, so as to improve system performance.

### SUMMARY

Embodiments of the present disclosure provide an information reporting method, a device and a storage medium.

According to a first aspect of the embodiments of the present disclosure, an information reporting method is provided, including:
receiving first information configured from a network device, in which the first information at least includes a plurality of channel state information reference signal (CSI-RS) resources;
performing measurement based on the plurality of CSI-RS resources and obtaining a plurality of measurement results; and
reporting second information to the network device, in which the second information indicates the plurality of measurement results.

According to a second aspect of the embodiments of the present disclosure, an information reporting method is provided, including:
sending first information configured from the network device to a terminal device, in which the first information at least includes a plurality of channel state information reference signal (CSI-RS) resources; and the first information is used for the terminal device to perform measurement based on the plurality of CSI-RS resources and obtain a plurality of measurement results; and
receiving second information reported by the terminal device, in which the second information indicates the plurality of measurement results.

According to a third aspect of the embodiments of the present disclosure, a terminal device is provided, including:
a transceiver module, configured to receive first information configured from a network device, in which the first information at least includes a plurality of channel state information reference signal (CSI-RS) resources; and
a processing module, configured to perform measurement based on the plurality of CSI-RS resources and obtaining a plurality of measurement results.

The transceiver module is further configured to report second information to the network device, and the second information indicates the plurality of measurement results.

According to a fourth aspect of the embodiments of the present disclosure, a network device is provided, including a transceiver module, configured to send first information configured from the network device to a terminal device. The first information at least includes a plurality of channel state information reference signal (CSI-RS) resources; and the first information is used for the terminal device to perform measurement based on the plurality of CSI-RS resources and obtain a plurality of measurement results. The transceiver module is further configured to receive second information reported by the terminal device, and the second information indicates the plurality of measurement results.

According to a fifth aspect of the embodiments of the present disclosure, a communication device is provided, including one or more processors. The communication device is configured to perform optional implementations of the first aspect or the second aspect.

According to a sixth aspect of the embodiments of the present disclosure, a communication system is provided, which may include: a terminal device and a network device. The terminal device is configured to perform the method described in the optional implementations of the first aspect, and the network device is configured to perform the method described in the optional implementations of the second aspect.

According to a seventh aspect of the embodiments of the present disclosure, a storage medium is provided, which includes instructions stored thereon. When the instructions are executed on a communication device, cause the communication device to perform the method described in the optional implementations of the first aspect or the second aspect.

The technical solutions in the embodiments of the present disclosure may include the following beneficial effects. A terminal device receives first information configured from a network device, in which the first information at least includes a plurality of channel state information reference signal (CSI-RS) resources, performs measurement based on the plurality of CSI-RS resources to obtain a plurality of measurement results, and reports second information to the network device, in which the second information indicates the plurality of measurement results. In this way, the terminal device can feed back the plurality of measurement results at one time, thereby reducing feedback overhead of the terminal device while ensuring system performance.

As can be appreciated, the above general description and the following detailed description are for illustrative purposes only, but shall not be construed as limiting the scope of the present disclosure.

### BRIEF DESCRIPTION OF THE DRAWINGS

In order to illustrate the technical solutions of the embodiments of the present disclosure in a clearer manner, the drawings required for the description of the embodiments will be described hereinafter. The following drawings merely relate to some embodiments of the present disclosure, but shall not be construed as limiting the scope of the present disclosure.
FIG. 1 is a schematic structural diagram of a communication system according to an embodiment of the present disclosure.
FIG. 2 is a schematic interactive diagram of an information reporting method according to an embodiment of the present disclosure.
FIG. 3 is a schematic flow chart of an information reporting method according to an embodiment of the present disclosure.
FIG. 4 is a schematic flow chart of an information reporting method according to an embodiment of the present disclosure.
FIG. 5A is a schematic structural diagram of a terminal device according to an embodiment of the present disclosure.
FIG. 5B is a schematic structural diagram of a network device according to an embodiment of the present disclosure.
FIG. 6A is a schematic structural diagram of a communication device according to an embodiment of the present disclosure.
FIG. 6B is a schematic structural diagram of a chip according to an embodiment of the present disclosure.

### DETAILED DESCRIPTION

Embodiments of the present disclosure provide an information reporting method, a device and a storage medium.

In a first aspect, an embodiment of the present disclosure provides an information reporting method, including:

receiving first information configured from a network device, in which the first information at least includes a plurality of channel state information reference signal (CSI-RS) resources;

performing measurement based on the plurality of CSI-RS resources and obtaining a plurality of measurement results; and

reporting second information to the network device, in which the second information indicates the plurality of measurement results.

In the above embodiment, the terminal device can feed back the plurality of measurement results at one time, thereby reducing the feedback overhead of the terminal device while ensuring the system performance.

According to the aforementioned embodiment of the first aspect, the second information includes first indication information indicating first CSI-RS resources, and the first CSI-RS resources include a first quantity of CSI-RS resources among the plurality of CSI-RS resources.

In the above embodiment, the terminal device can indicate the plurality of CSI-RS resources through the first indication information, thereby reducing the feedback overhead of the terminal device.

According to the aforementioned embodiments of the first aspect, a bitwidth of the first indication information is *Kₛ*, and *Kₛ* is a quantity of the plurality of CSI-RS resources.

In the above embodiment, the bitwidth of the first indication information may be determined based on the quantity of the plurality of CSI-RS resources configured from the network device, so that the feedback overhead can be controlled more effectively.

According to the aforementioned embodiments of the first aspect, a bitwidth of the first indication information is $\left⌈{log}_{2}^{{C}_{{K}_{s}}^{M}}\right⌉$, *Kₛ* is a quantity of the plurality of CSI-RS resources, and M is the first quantity.

In the above embodiment, the bitwidth of the first indication information can be determined based on the quantity of the plurality of CSI-RS resources configured from the network device and the first quantity. In this way, the feedback overhead of the terminal device can be reduced.

According to the aforementioned embodiments of the first aspect, the second information further includes second indication information indicating the first quantity.

In the above embodiment, when the terminal device reports the first indication information to the network device, it may also report the first quantity to inform the network device of the quantity of the first CSI-RS resources indicated by the first indication information.

According to the aforementioned embodiments of the first aspect, the method further includes receiving third information sent from the network device, in which the third information indicates the first quantity.

In the above embodiment, the network device may indicate the quantity of CSI-RS resources that the terminal device needs to report through the third information.

According to the aforementioned embodiments of the first aspect, the second information includes third indication information, and the third indication information indicates a rank indicator (RI) corresponding to the first CSI-RS resources.

In the above embodiment, the terminal device can indicate the RI corresponding to multiple CSI-RS resources through the third indication information, thereby reducing the feedback overhead of the terminal device.

According to the aforementioned embodiments of the first aspect, a bitwidth of the third indication information is determined based on a second quantity, and the second quantity is a number of layers allowed by the network device for reporting.

In the above embodiment, the bitwidth of the third indication information may be determined based on the number of layers allowed to be reported by the network device, so that the feedback overhead can be controlled more effectively.

According to the aforementioned embodiments of the first aspect, the first indication information includes a plurality of instances of fourth indication information, and different instances of fourth indication information indicate RIs corresponding to different CSI-RS resources in the first CSI-RS resources, respectively.

In the above embodiment, the corresponding RI may be reported independently for each CSI-RS resource.

According to the aforementioned embodiments of the first aspect, the first indication information includes fifth indication information indicating a combination index of a first RI combination, and the first RI combination is a combination of RIs corresponding to the first CSI-RS resources.

In the above embodiment, the RIs corresponding to multiple CSI-RS resources can be reported at one time by means of combined indication, thereby reducing the amount of data fed back by the terminal device and reducing the feedback overhead of the terminal device.

According to the aforementioned embodiments of the first aspect, a bitwidth of the fifth indication information is determined based on a quantity of second RI combinations, the second RI combinations include a combination of first RIs corresponding to the first CSI-RS resources, and the first RIs each includes an RI that is less than or equal to a maximum RI corresponding to the first CSI-RS resources.

In the above embodiment, the bitwidth of the fifth indication information can be determined based on the quantity of RI combinations, and thus the feedback overhead of the terminal device can be reduced.

According to the aforementioned embodiments of the first aspect, the second information includes sixth indication information, and the sixth indication information indicates a layer indicator (LI) corresponding to the first CSI-RS resources.

In the above embodiment, the terminal device can indicate the LI corresponding to multiple CSI-RS resources through the sixth indication information, thereby reducing the feedback overhead of the terminal device.

According to the aforementioned embodiments of the first aspect, a bitwidth of the sixth indication information is determined based on a third quantity, and the third quantity is a number of layers that the terminal device is capable for reporting.

In the above embodiment, the bitwidth of the sixth indication information can be determined based on the number of layers that can be reported by the terminal device. In this way, the feedback overhead of the terminal device can be reduced.

According to the aforementioned embodiments of the first aspect, the second information includes seventh indication information, and the seventh indication information indicates a channel quality indicator (CQI) corresponding to the first CSI-RS resources.

In the above embodiment, the terminal device can indicate the CQI corresponding to multiple CSI-RS resources through the seventh indication information, thereby reducing the feedback overhead of the terminal device.

According to the aforementioned embodiments of the first aspect, the seventh indication information includes a plurality of instances of eighth indication information, and different instances of eighth indication information indicate wideband CQIs corresponding to different CSI-RS resources, respectively.

In the above embodiment, the corresponding CQI may be reported independently for each CSI-RS resource.

According to the aforementioned embodiments of the first aspect, the seventh indication information includes ninth indication information and tenth indication information, the ninth indication information indicates a reference wideband CQI, and the tenth indication information indicates a first differential amount. The first differential amount includes differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources. The second CSI-RS resources include CSI-RS resources in the first CSI-RS resources other than a reference CSI-RS resource.

In the above embodiment, the wideband CQIs corresponding to multiple CSI-RS resources can be reported in a differential manner, which reduces the amount of data fed back by the terminal device and reduces the feedback overhead of the terminal device.

According to the aforementioned embodiments of the first aspect, the reference wideband CQI is a wideband CQI corresponding to the reference CSI-RS resource, or an average value of second wideband CQIs corresponding to a plurality of CSI-RS resources in the first CSI-RS resources.

In the above embodiment, the reference wideband CQI may be determined in a variety of ways, thereby improving the flexibility of the reference wideband CQI.

According to the aforementioned embodiments of the first aspect, the method further includes determining the reference CSI-RS resource according to a first rule, in which the first rule is specified by a protocol or indicated by the network device.

In the above embodiment, the reference CSI-RS resource may be specified by the protocol or indicated by the network device.

According to the aforementioned embodiments of the first aspect, the second information further includes eleventh indication information indicating a second differential amount, and the second differential amount includes, for each CSI-RS resource among the first CSI-RS resources, a differential amount between a sub-band CQI and a wideband CQI corresponding to the CSI-RS resource.

In the above embodiment, the sub-band CQIs corresponding to the CSI-RS resources can be reported in a differential manner, which reduces the amount of data fed back by the terminal device and further reduces the feedback overhead of the terminal device.

According to the aforementioned embodiments of the first aspect, the second information includes twelfth indication information, and the twelfth indication information indicates quantities of non-zero coefficients of a plurality of data transmission layers corresponding to the first CSI-RS resources.

In the above embodiment, the terminal device can indicate the quantities of non-zero coefficients of the plurality of data transmission layers corresponding to multiple CSI-RS resources through the twelfth indication information, thereby reducing the feedback overhead of the terminal device.

According to the aforementioned embodiments of the first aspect, the twelfth indication information includes a plurality of instances of thirteenth indication information, and different instances of thirteenth indication information indicate quantities of non-zero coefficients of different data transmission layers corresponding to different CSI-RS resources, respectively.

In the above embodiment, the quantities of non-zero coefficients of the corresponding different data transmission layers may be reported independently for each CSI-RS resource.

According to the aforementioned embodiments of the first aspect, the twelfth indication information includes fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

In the above embodiment, the quantities of non-zero coefficients of different data transmission layers corresponding to the CSI-RS resources may be reported in a differential manner, thereby reducing the amount of data fed back by the terminal device and further reducing the feedback overhead of the terminal device.

According to the aforementioned embodiments of the first aspect, the first reference quantity is determined by:
determining the quantities of non-zero coefficients of the data transmission layer respectively corresponding to the CSI-RS resources in the first CSI-RS resources and obtaining a plurality of first quantities; and
determining the first reference quantity based on the plurality of first quantities.

In the above embodiment, the first reference quantity can be determined based on the quantity of all non-zero coefficients corresponding to each CSI-RS resource in the first CSI-RS resource, thereby reducing the amount of difference data that the terminal device needs to report and further reducing the feedback overhead.

According to the aforementioned embodiments of the first aspect, determining the first reference quantity based on the plurality of first quantities includes:
taking a maximum value among the plurality of first quantities as the first reference quantity;
taking a minimum value among the plurality of first quantities as the first reference quantity; or
taking an average value of the plurality of first quantities as the first reference quantity.

In the above embodiment, the maximum value, the minimum value or the average value of the plurality of first quantities can be used as the first reference quantity, which improves the flexibility of the first reference quantity.

According to the aforementioned embodiments of the first aspect, a bitwidth of the fourteenth indication information and a bitwidth of the fifteenth indication information are determined based on a quantity of spatial domain basis vectors.

In the above embodiment, the bitwidth of the fourteenth indication information and the bitwidth of the fifteenth indication information can be determined based on the quantity of spatial basis vectors. In this way, the feedback overhead of the terminal device can be reduced.

According to the aforementioned embodiments of the first aspect, the second information further includes sixteenth indication information, and the sixteenth indication information indicates a CSI-RS resource corresponding to the first reference quantity.

In the above embodiment, the CSI-RS resource corresponding to the first reference number may be reported to the network device while reporting the quantities of non-zero coefficients of different data transmission layers corresponding to the CSI-RS resources.

According to the aforementioned embodiments of the first aspect, a bitwidth of the sixteenth indication information is determined based on the quantity of the plurality of CSI-RS resources.

In the above embodiment, the bitwidth of the sixteenth indication information can be determined based on the quantity of spatial basis vectors. In this way, the feedback overhead of the terminal device can be reduced.

According to the aforementioned embodiments of the first aspect, the second information includes a plurality of instances of seventeenth indication information, and different instances of seventeenth indication information indicate quantities of non-zero coefficients of all data transmission layers corresponding to different CSI-RS resources, respectively.

In the above embodiment, the quantities of non-zero coefficients of all data output layers corresponding to the CSI-RS resource may be reported through the seventeenth indication information, that is, the quantity of non-zero coefficients corresponding to each CSI-RS resource is reported independently.

According to the aforementioned embodiments of the first aspect, the twelfth indication information includes eighteenth indication information and nineteenth indication information, the eighteenth indication information indicates a second reference quantity corresponding to the plurality of data transmission layers, and the nineteenth indication information indicates differences between the second reference quantity and quantities of non-zero coefficients of all data transmission layers respectively corresponding to CSI-RS resources in the first CSI-RS resources.

In the above embodiment, the quantities of non-zero coefficients corresponding to the CSI-RS resources can be reported in a differential manner, which reduces the amount of data fed back by the terminal device and further reduces the feedback overhead of the terminal device.

According to the aforementioned embodiments of the first aspect, the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

In the above embodiment, the second reference quantity can be determined based on the quantities of all non-zero coefficients corresponding to the CSI-RS resources in the first CSI-RS resources, thereby reducing the amount of difference data that the terminal device needs to report and further reducing the feedback overhead.

According to the aforementioned embodiments of the first aspect, determining the second reference quantity based on the plurality of second quantities includes:
taking a maximum value among the plurality of second quantities as the second reference quantity;
taking a minimum value among the plurality of second quantities as the second reference quantity; or
taking an average value of the plurality of second quantities as the second reference quantity.

In the above embodiment, the maximum value, the minimum value or the average value of the plurality of second quantities may be used as the second reference quantity, thereby improving the flexibility of the first reference quantity.

According to the aforementioned embodiments of the first aspect, a bitwidth of the eighteenth indication information and a bitwidth of the nineteenth indication information are determined based on a maximum quantity of non-zero coefficients allowed by all data transmission layers corresponding to the first CSI-RS resources.

In the above embodiment, the bitwidth of the eighteenth indication information and the bitwidth of the nineteenth indication information can be determined based on the maximum quantity of non-zero coefficients allowed by all data transmission layers corresponding to the first CSI-RS resources. In this way, the feedback overhead of the terminal device can be reduced.

According to the aforementioned embodiments of the first aspect, the second information further includes twentieth indication information, and the twentieth indication information indicates a CSI-RS resource corresponding to the second reference quantity.

In the above embodiment, while reporting the quantities of non-zero coefficients corresponding to the CSI-RS resources, the CSI-RS resource corresponding to the second reference quantity can be reported to the network device.

According to the aforementioned embodiments of the first aspect, a bitwidth of the twentieth indication information is determined based on the quantity of the plurality of CSI-RS resources.

In the above embodiment, the bitwidth of the twentieth indication information can be determined based on the quantity of the plurality of CSI-RS resources. In this way, the feedback overhead of the terminal device can be reduced.

In a second aspect, an embodiment of the present disclosure provides an information reporting method, including:
sending first information configured from the network device to a terminal device, in which the first information at least includes a plurality of channel state information reference signal (CSI-RS) resources; and the first information is used for the terminal device to perform measurement based on the plurality of CSI-RS resources and obtain a plurality of measurement results; and
receiving second information reported by the terminal device, in which the second information indicates the plurality of measurement results.

According to the aforementioned embodiments of the second aspect, the second information includes first indication information indicating first CSI-RS resources, and the first CSI-RS resources include a first quantity of CSI-RS resources among the plurality of CSI-RS resources.

According to the aforementioned embodiments of the second aspect, the second information includes third indication information, and the third indication information indicates a rank indicator (RI) corresponding to the first CSI-RS resources.

According to the aforementioned embodiments of the second aspect, the second information includes sixth indication information, and the sixth indication information indicates a layer indicator (LI) corresponding to the first CSI-RS resources.

According to the aforementioned embodiments of the second aspect, the second information includes seventh indication information, and the seventh indication information indicates a channel quality indicator (CQI) corresponding to the first CSI-RS resources.

According to the aforementioned embodiments of the second aspect, the second information includes twelfth indication information, and the twelfth indication information indicates quantities of non-zero coefficients of a plurality of data transmission layers corresponding to the first CSI-RS resources.

In a third aspect, an embodiment of the present disclosure provides an information reporting method, including:
sending, by a network device, first information configured from the network device to a terminal device, in which the first information at least includes a plurality of channel state information reference signal (CSI-RS) resources;
performing, by the terminal device, measurement based on the plurality of CSI-RS resources and obtaining a plurality of measurement results; and
reporting, by the terminal device, second information to the network device, in which the second information indicates the plurality of measurement results.

In a fourth aspect, an embodiment of the present disclosure provides a terminal device, which may include at least one of a transceiver module or a processing module. The terminal device may be configured to perform the optional implementations of the first aspect.

In a fifth aspect, an embodiment of the present disclosure proposes a network device, which may include at least one of a transceiver module or a processing module. The network device may be configured to perform the optional implementations of the second aspect.

In a sixth aspect, an embodiment of the present disclosure proposes a terminal device, which may include one or more processors. The terminal device may be configured to perform the optional implementations of the first aspect.

In a seventh aspect, an embodiment of the present disclosure proposes a network device, which may include one or more processors. The network device may be configured to perform the optional implementations of the second aspect.

In an eighth aspect, an embodiment of the present disclosure proposes a communication device, which may include one or more processors. The communication device may be configured to perform the optional implementations of the first aspect or the second aspect.

In a ninth aspect, an embodiment of the present disclosure proposes a communication system, which may include a terminal device and a network device. The terminal device is configured to perform the method described in the optional implementations of the first aspect, and the network device is configured to perform the method described in the optional implementations of the second aspect.

In a tenth aspect, an embodiment of the present disclosure proposes a storage medium having stored thereon instructions, which, when executed on a communication device, cause the communication device to perform the method described in the optional implementations of the first aspect or the second aspect.

In an eleventh aspect, an embodiment of the present disclosure proposes a program product, which, when executed by a communication device, causes the communication device to perform the method described in the optional implementations of the first aspect or the second aspect.

In a twelfth aspect, an embodiment of the present disclosure proposes a computer program, which, when run on a computer, causes the computer to perform the method described in the optional implementations of the first aspect or the second aspect.

In a thirteenth aspect, an embodiment of the present disclosure provides a chip or a chip system. The chip or chip system includes a processing circuit configured to execute the method described in the optional implementations of the first aspect or the second aspect.

As can be appreciated, the terminal device, the network device, the communication device, the communication system, the storage medium, the program product, the computer program, a chip and a chip system are all used to perform the methods in the embodiments of the present disclosure. Therefore, the beneficial effects that can be achieved may refer to the beneficial effects in the corresponding methods, and thus the description thereof is omitted herein.

Embodiments of the present disclosure provide an information reporting method, a device and a storage medium. In some embodiments, terms such as information reporting method, information transmission method, and communication method may be used interchangeably; terms such as information reporting apparatus, information processing apparatus, communication apparatus and communication device may be used interchangeably; and terms such as information reporting system and communication system may be used interchangeably.

The embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In various embodiments of the present disclosure, unless otherwise specified and in case of logical conflicts, the terms and/or descriptions among the embodiments are consistent and may be referenced to each other, and technical features in different embodiments may be combined to form new embodiments according to their intrinsic logical relationships.

The terms used in the embodiments of the present disclosure are for the purpose of describing specific embodiments only, and is not intended to limit the present disclosure.

In the embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In the embodiments of the present disclosure, "a plurality of" may refer to two or more.

In some embodiments, terms such as "at least one of", "one or more", "a plurality of", "multiple", may be used interchangeably.

In some embodiments of the present disclosure, expressions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, expressions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not impose limitations on the position, order, priority, quantity, content, etc. of the described objects. For the description of the described objects, please refer to the description of the context in the claims or the embodiments, and should not constitute unnecessary restrictions due to the use of the prefix words.

For example, if the described object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the described object is "level", the ordinal number before "level" in "first level" and "second level" does not limit the priority between "level". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to ...", "in response to determining ...", "in a case where ...", "when ...", "upon ...", "if ..." may be used interchangeably.

In some embodiments, terms such as "greater than", "greater than or equal to", "not smaller than", "more than", "more than or equal to", "not lower than", "higher", "higher than or equal to", "not less than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus and the device may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "body" and the like in some cases.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink or direct link.

In some embodiments, a terminal may be replaced by an access network device, a core network device, or a network device. In this case, the access network device, core network device, or network device may also have all or part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

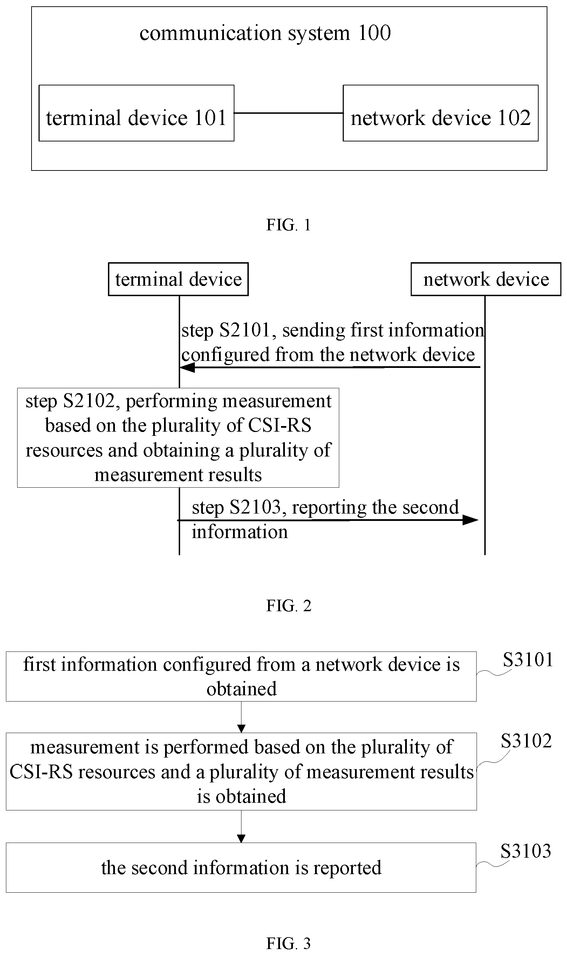

FIG. 1 is a schematic structural diagram of a wireless communication system according to an embodiment of the present disclosure. As shown in FIG. 1, a communication system 100 includes a terminal 101 and a network device 102.

In some embodiments, the terminal 101 may include at least one of, but is not limited to: a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device for autonomous driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 may include at least one of an access network device and a core network device.

In some embodiments, the access network device may be a node or device that connects a terminal to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the technical solutions of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but not limited thereto.

In some embodiments, the core network device may be one device, or may be a plurality of devices or a group of devices. The core network may include at least one of an evolved packet core (EPC), a 5G core network (5GCN), or a next generation core (NGC).

As can be appreciated, the communication system described in embodiments of the present disclosure is to more clearly explain the technical solution of embodiments of the present disclosure, and does not constitute a limitation on the technical solution provided by the embodiments of the present disclosure. As those skilled in the art know, with the evolution of the system architecture and the emergence of new business scenarios, the technical solutions provided by the embodiments of the present disclosure are applicable to similar technical problems.

The following embodiments of the present disclosure may be applied to the communication system 100 illustrated in FIG. 1 or a part of the entities, but are not limited thereto. The entities shown in FIG. 1 are illustrative, and the communication system may include all or part of the entities shown in FIG. 1, and may also include other entities other than those shown in FIG. 1. The number and form of the entities are arbitrary, each entity may be physical or virtual, the connection relationship between the entities is an example, the entities may not be connected or connected, and the connection may be any form, including direct connection or indirect connection, wired connection or wireless connection.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In some embodiments of the present disclosure, a channel state information (CSI) reporting setting may include configuration of the following parameters: a report quantity, a codebook configuration, a time-domain characteristic of CSI feedback, a frequency-domain granularity of PMI and CQI, and the like. The CRI-based report quantity may include: CRI-RI-PMI-CQI, CRI-RI-LI (layer indicator)-PMI-CQI, CRI-RI-CQI, CRI-RSRP (reference signal receiving power), and the like. In a case where the configured reporting quantity is CRI-RI-PMI-CQI, it means that CRI, RI, PMI and CQI are fed back and reported together. In the protocol, it is supported that a network side configures Ks (Ks > 1) CSI-RS resources for channel measurement. When Ks = 2, each CSI-RS resource may include at most 16 ports. When 2 < Ks ≤ 8, each CSI-RS resource may include at most 8 ports. The UE reports the CRI by using $\left⌈{log}_{2}\left({K}_{s}\right)\right⌉$ bits to indicate a selected CSI-RS resource, and the UE determines corresponding indication information such as RI, PMI and CQI based on the CSI-RS resource, and reports the indication information to the network side.

For a Rel-15 Type I single-panel codebook, bitwidths of indication information of RI, LI, CQI and CRI are shown in Table 1, where *n*_{RI} represents a rank allowed by the network for reporting, and υ represents a maximum rank that a terminal is capable of reporting.

**Table 1**

| Field | Bitwidth | | | | |
|---|---|---|---|---|---|
| | 1 antenna port | 2 antenna ports | 4 antenna ports | more than 4 antenna ports | |
| | | | | rank 1~4 | rank 5~8 |
| RI when codebook type is Type I single-panel | 0 | $min \left(1, \left⌈{log}_{2} {n}_{RI}\right⌉\right)$ | $min \left(2, \left⌈{log}_{2} {n}_{RI}\right⌉\right)$ | $\left⌈{log}_{2} {n}_{RI}\right⌉$ | $\left⌈{log}_{2} {n}_{RI}\right⌉$ |
| RI when report quantity is CRI-RI-CQI | 0 | 1 | 2 | 3 | 3 |
| Layer indicator | 0 | $\left⌈{log}_{2} υ\right⌉$ | $min \left(2, \left⌈{log}_{2} v\right⌉\right)$ | $min \left(2, \left⌈{log}_{2} v\right⌉\right)$ | $min \left(2, \left⌈{log}_{2} v\right⌉\right)$ |
| Wideband CQI for first transport block | 4 | 4 | 4 | 4 | 4 |
| Wideband CQI for second transport block | 0 | 0 | 0 | 0 | 4 |
| Sub-band differentia 1 CQI for first transport block | 2 | 2 | 2 | 2 | 2 |
| Sub-band differentia 1 CQI for second transport block | 0 | 0 | 0 | 0 | 2 |
| CRI | $\left⌈{log}_{2}\left({K}_{s}\right)\right⌉$ | $\left⌈{log}_{2}\left({K}_{s}\right)\right⌉$ | $\left⌈{log}_{2}\left({K}_{s}\right)\right⌉$ | $\left⌈{log}_{2}\left({K}_{s}\right)\right⌉$ | $\left⌈{log}_{2}\left({K}_{s}\right)\right⌉$ |

For a Rel-15 Type I multi-panel codebook, bitwidths of indication information of RI, LI, CQI and CRI are shown in Table 2.

**Table 2**

| Field | Bitwidth |
|---|---|
| RI | $min \left(2, \left⌈{log}_{2} {n}_{RI}\right⌉\right)$ |
| LI | $min \left(2, \left⌈{log}_{2} v\right⌉\right)$ |
| Wideband CQI | 4 |
| Sub-band differential CQI | 2 |
| CRI | $\left⌈{log}_{2}\left({K}_{s}\right)\right⌉$ |

For a Rel-15 Type II and port selection codebook, bitwidths of indication information of RI, LI and CQI are shown in Table 3. L represents the quantity of spatial domain basis vectors, which is configured by the network side to the terminal.

**Table 3**

| Field | Bitwidth |
|---|---|
| RI | $min \left(1, \left⌈{log}_{2} {n}_{RI}\right⌉\right)$ |
| LI | $min \left(2, \left⌈{log}_{2} v\right⌉\right)$ |
| Wideband CQI | 4 |
| Sub-band differential CQI | 2 |
| Indicator of the quantity *Mₗ* of non-zero wideband amplitude coefficients for layer *l* | $\left⌈{log}_{2}\left(2L-1\right)\right⌉$ |

For a Rel-16/17 Type II codebook, bitwidths of indication information of RI, LI and CQI are shown in Table 4. *K*₀ represents the maximum quantity of non-zero coefficients allowed per layer, which is configured by the network side to the terminal.

**Table 4**

| Field | Bitwidth |
|---|---|
| RI | $min \left(2, \left⌈{log}_{2}{n}_{RI}\right⌉\right)$ |
| Wideband CQI | 4 |
| Sub-band differential CQI | 2 |
| Indicator *K^{NZ}* of the total quantity of non-zero coefficients summed over all layers | if the maximum allowed rank is 1, $\left⌈{log}_{2}\left({K}_{0}\right)\right⌉$ ; otherwise, $\left⌈{log}_{2}\left(2{K}_{0}\right)\right⌉$ |

In some embodiments, in order to further improve system efficiency or enhance coverage, expanding the antenna scale by increasing the quantity of antenna ports is an important technical means to achieve this objective. In current commercial deployments, the antenna scale can be further expanded to four times the original size. For example, it is necessary to support 64 or 128 CSI-RS ports to implement channel measurement for 64 or 128 antenna ports. Considering the trade-off between performance and deployment cost, future standard evolution will continue to adopt hybrid beamforming combining digital and analog beams. As the quantity of ports increases, the quantity of users accessing the network also increases. Accordingly, the network requires the terminal to feed back more CRI, RI, CQI and/or PMI for multi-user scheduling to improve system performance. Each RI/CQI/PMI is obtained by calculation based on an independent CSI-RS resource, and the corresponding CSI-RS resource is indicated by the CRI. When CRI > 1, if the corresponding RI/CQI/PMI for each resource is reported independently, the feedback overhead may increase exponentially. Therefore, how to reduce the feedback overhead of the terminal while ensuring limited performance loss has become an urgent problem to be solved.

FIG. 2 is a schematic interactive diagram of an information reporting method according to an embodiment of the present disclosure. The method may be performed by the above communication system. As shown in FIG. 2, the method may include the following steps.

In step S2101, a network device sends first information configured by the network device to a terminal device.

In some embodiments, the terminal device may receive the first information. For example, the terminal device may receive the first information sent from the network device. For another example, the terminal device may also receive the first information sent from another entity.

In some embodiments, the first information may include a plurality of CSI-RS resources.

In some embodiments, the first information may be configured in a manner specified by the protocol, and thus the description thereof is omitted herein.

In some embodiments, the name of the first information is not limited, and may be, for example, "CSI-RS resource configuration", "CSI-RS resource configuration indication information", "measurement configuration indication information".

In step S2102, the terminal device performs measurement based on the plurality of CSI-RS resources and obtains a plurality of measurement results.

In some embodiments, the terminal device may perform measurement based on the plurality of CSI-RS resources in a manner specified by the protocol to obtain the plurality of measurement results, and thus the description thereof is omitted herein.

In some embodiments, different CSI-RS resources may correspond to different measurement results, respectively. For example, one CSI-RS resource corresponds to one measurement result.

In step S2103, the terminal device reports the second information to the network device.

In some embodiments, the second information indicates the plurality of measurement results.

In some embodiments, the second information may include first indication information indicating first CSI-RS resources, and the first CSI-RS resources may include a first quantity of CSI-RS resources among the plurality of CSI-RS resources.

In some embodiments, the first indication information may also be referred to as CRI.

In some embodiments, the terminal device may select the first quantity of CSI-RS resources from the plurality of CSI-RS resources configured by the network device as the first CSI-RS resources. For example, the first quantity is M, the terminal device may select M CSI-RS resources from the plurality of CSI-RS resources as the first CSI-RS resources.

In some embodiments, the second information may further include second indication information indicating the first quantity.

For example, the terminal device determines the first CSI-RS resource by itself, the quantity of CSI-RS resources included in the first CSI-RS resource, that is, the first quantity, may be reported to the network device.

In some embodiments, a bitwidth of the second indication information may be $\left⌈{log}_{2}^{{K}_{s}}\right⌉$, where *Kₛ* is a quantity of the plurality of CSI-RS resources.

In some embodiments, the bitwidth may be in units of bits.

In some embodiments, the bitwidth may be understood as the quantity of bits occupied. For example, the bitwidth of the second indication information may be the quantity of bits occupied by the second indication information.

For example, the quantity *Kₛ* of the plurality of CSI-RS resources configured by the network device is 4, the bitwidth of the second indication information is 2 bits.

In some embodiments, the terminal device may receive third information sent from the network device, and the third information may indicate the first quantity.

For example, after receiving the third information sent from the network device, the terminal device may determine the first CSI-RS resources based on the first quantity indicated by the third information.

In some embodiments, a bitwidth of the first indication information may be *Kₛ*, where *Kₛ* is a quantity of the plurality of CSI-RS resources.

For example, the first information includes 4 CSI-RS resources, that is, *Kₛ* = 4, and IDs of the 4 CSI-RS resources are 1, 2, 3, and 4, respectively, the bitwidth of the first indication information is 4 bits, and the terminal device may indicate the reported CRI with a bitwidth of 4 bits, as shown in Table 5.

**Table 5**

| | | | |
|---|---|---|---|
| 0 (CSI-RS ID1) | 1 (CSI-RS ID2) | 1 (CSI-RS ID3) | 0 (CSI-RS ID4) |

"1" indicates that RI/PMI/CQI corresponding to a CSI-RS resource is reported, and "0" indicates that the RI/PMI/CQI corresponding to the CSI-RS resource is not reported. The indication of the bitmap may correspond sequentially to CSI-RS resources according to an order of IDs of the CSI-RS resources from small to large or from large to small. For example, in Table 5, the least significant bit (LSB) in the bitmap corresponds to CSI-RS ID1, and the most significant bit (MSB) in the bitmap corresponds to CSI-RS ID4. Therefore, according to the indication of the bitmap, it is determined that the terminal device reports only the RI/PMI/CQI corresponding to the CSI-RS resources with CSI-RS ID2 and CSI-RS ID3.

In some embodiments, a bitwidth of the first indication information is $\left⌈{log}_{2}^{{C}_{{K}_{s}}^{M}}\right⌉$, *Kₛ* is a quantity of the plurality of CSI-RS resources, and M is the first quantity.${C}_{{K}_{s}}^{M}$ represents a combinatorial calculation for selecting M CSI-RS resources from the *Kₛ* CSI-RS resources configured by the network device.

In some embodiments, the second information may include third indication information, and the third indication information indicates a rank indicator (RI) corresponding to the first CSI-RS resources.

In an implementation, for all CSI-RS resources in the first CSI-RS resource, only one RI is reported, and the third indication information may indicate the RI.

In some embodiments, a bitwidth of the third indication information may be determined based on a second quantity, where the second quantity is a number of layers allowed by the network device for reporting.

In an implementation, the bitwidth of the third indication information may be $\left⌈{log}_{2} {n}_{RI}\right⌉$ bits, $min \left(1, \left⌈{log}_{2} {n}_{RI}\right⌉\right)$ bit or $min \left(2, \left⌈{log}_{2} {n}_{RI}\right⌉\right)$ bits, where *n*_{RI} is the second quantity.

For example, the third indication information includes one RI, that is, for all CSI-RS resources in the first CSI-RS resource, only one RI is reported, and the bitwidth of the third indication information may be $\left⌈{log}_{2} {n}_{RI}\right⌉$ bits.

In some embodiments, the first indication information may include a plurality of instances of fourth indication information, and different instances of fourth indication information indicate RIs corresponding to different CSI-RS resources in the first CSI-RS resources, respectively.

In some embodiments, "different instances of fourth indication information indicating RIs corresponding to different CSI-RS resources in the first CSI-RS resources, respectively" may be understood as "one CSI-RS resource of the first CSI-RS resources corresponds to one RI, and one instance of fourth indication information indicates one RI".

For example, for any one CSI-RS resource in the first CSI-RS resource, the RI corresponding to the CSI-RS resource may be indicated, that is, one RI is reported for one CSI-RS resource.

The bitwidth of the fourth indication information may be determined with reference to the manner of determining the bitwidth of the third indication information, and details are not described herein again.

In some embodiments, the first indication information may include fifth indication information indicating a combination index of a first RI combination, and the first RI combination is a combination of RIs corresponding to the first CSI-RS resources.

For example, the first CSI-RS resource includes 2 CSI-RS resources, and the maximum RIs corresponding to the 2 CSI-RS resources are both 2, it may be determined that the first RIs corresponding to the 2 CSI-RS resources each includes 1 and 2, and the second RI combination may include (1,1), (1,2), (2,1) and (2,2), where (1,1) indicates that the RIs of the 2 CSI-RS resources are each 1, (1,2) indicates that the RI of the first CSI-RS resource is 1, and the RI of the second CSI-RS resource is 2. The explanations of other combinations are similar, and details are not described herein again.

In some embodiments, one second RI combination may correspond to one combination index. Taking the above-mentioned four second RI combinations as an example, combination indexes may include 1, 2, 3, and 4.

For example, the first RI combination is (1, 2), the combination index of the first RI is 2, and the fifth indication information may indicate the combination index 2.

In some embodiments, a bitwidth of the fifth indication information may be determined based on a quantity of second RI combinations, the second RI combinations include a combination of first RIs corresponding to the first CSI-RS resources, and the first RIs each includes an RI that is less than or equal to a maximum RI corresponding to the first CSI-RS resources.

In one implementation, the bitwidth of the fifth indication information may be $\left⌈{log}_{2} X\right⌉$ bits. Taking the above-mentioned four second RI combinations as an example, the quantity of the second RI combinations is 4, and the bitwidth of the fifth indication information is 2 bits.

In some embodiments, the second information may include sixth indication information, and the sixth indication information indicates a layer indicator (LI) corresponding to the first CSI-RS resources.

In some embodiments, for all CSI-RS resources in the first CSI-RS resources, only one LI is reported, and the sixth indication information indicates the RI.

In some embodiments, a bitwidth of the sixth indication information is determined based on a third quantity, and the third quantity is a number of layers that the terminal device is capable for reporting.

In an implementation, the bitwidth of the sixth indication information may be $\left⌈{log}_{2} υ\right⌉$ bits or $min \left(2, \left⌈{log}_{2} v\right⌉\right)$ bits, where v is the third quantity.

For example, the sixth indication information includes one LI, that is, for all CSI-RS resources in the first CSI-RS resources, only one LI is reported, and the bitwidth of the sixth indication information may be $\left⌈{log}_{2} υ\right⌉$ bits.

In some embodiments, the second information may include seventh indication information, and the seventh indication information indicates a channel quality indicator (CQI) corresponding to the first CSI-RS resources.

In some embodiments, the CQI may include a wideband CQI and a sub-band CQI.

In some embodiments, for one CSI-RS resource in the first CSI-RS resources, one wideband CQI may be independently reported.

In some embodiments, the seventh indication information may include a plurality of instances of eighth indication information, and different instances of eighth indication information indicate wideband CQIs corresponding to different CSI-RS resources, respectively.

For example, for each CSI-RS resource in the first CSI-RS resources, a wideband CQI corresponding to each CSI-RS resource may be indicated respectively, that is, one wideband CQI is reported for one CSI-RS resource.

In some embodiments, the seventh indication information may include ninth indication information and tenth indication information, the ninth indication information indicates a reference wideband CQI, and the tenth indication information indicates a first differential amount. The first differential amount may include differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources. The second CSI-RS resources include CSI-RS resources in the first CSI-RS resources other than a reference CSI-RS resource.

In some embodiments, the reference wideband CQI may be a wideband CQI corresponding to the reference CSI-RS resource, or an average value of second wideband CQIs corresponding to a plurality of CSI-RS resources in the first CSI-RS resources.

In an implementation, the reference CSI-RS resource may be determined from the first CSI-RS resources, and a wideband CQI corresponding to the reference CSI-RS resource may be used as the reference wideband CQI.

In another implementation, the second wideband CQIs respectively corresponding to the CSI-RS resources in the first CSI-RS resources may be determined to obtain multiple second wideband CQIs, an average value of the multiple second wideband CQIs may be determined, and the average value may be used as the reference wideband CQI.

In some embodiments, the reference wideband CQI is the wideband CQI corresponding to the reference CSI-RS resource, the first differential amount may include the differential amounts between the reference wideband CQI and the second wideband CQIs respectively corresponding to the CSI-RS resources in the first CSI-RS resources.

In some embodiments, the reference wideband CQI is the average value of the second wideband CQIs corresponding to multiple CSI-RS resources in the first CSI-RS resource, the first differential amount may include the differential amounts between the reference wideband CQI and the second wideband CQIs respectively corresponding to the CSI-RS resources in the second CSI-RS resources.

In some embodiments, the reference CSI-RS resource may be determined according to a first rule, where the first rule is specified by a protocol or indicated by the network device.

"Specified by a protocol" can be understood as "predefined", for example, the predefined reference CSI-RS resource may be a CSI-RS resource corresponding to a first one of the reported CRIs.

It should be noted that the reference CSI-RS resource may also be another predefined CSI-RS resource, which is not limited in the embodiments of the present disclosure.

"Indicated by the network device" can be understood as the network device indicating one CSI-RS resource as the reference CSI-RS resource.

In some embodiments, the first differential amount may include multiple differential amounts, and different differential amounts correspond to different CSI-RS resources, respectively.

In some embodiments, "different differential amounts correspond to different CSI-RS resources, respectively" may be understood as "one CSI-RS resource corresponds to one differential amount".

In an implementation, the terminal device may determine the reference CSI-RS resource from the first CSI-RS resources, and determine second wideband CQIs respectively corresponding to CSI-RS resources in the first CSI-RS resources. For example, the first CSI-RS resources include CSI-RS resource 1, CSI-RS resource 2, CSI-RS resource 3 and CSI-RS resource 4, and CSI-RS resource 1 is the reference CSI-RS resource. In this case, second wideband CQIs respectively corresponding to the four CSI-RS resources may be determined, and a second wideband CQI corresponding to CSI-RS resource 1 is a reference wideband CQI. Next, a differential amount between a second wideband CQI corresponding to CSI-RS resource 2 and the reference wideband CQI, a differential amount between a second wideband CQI corresponding to CSI-RS resource 3 and the reference wideband CQI, and a differential amount between a second wideband CQI corresponding to CSI-RS resource 4 and the reference wideband CQI may be determined, and two differential amounts obtained are the first differential amount.

For example, the terminal device reports CQIs corresponding to 2 CRIs, that is, the first CSI-RS resources include 2 CSI-RS resources, and a wideband CQI corresponding to a CSI-RS resource with the smallest ID in the first CSI-RS resources is predefined as the reference wideband CQI, which may be quantized by a=4 bits. The other CSI-RS resource in the first CSI-RS resources may be differentially quantized by using 2 bits.

In an implementation, the tenth indication information may also be differential CQI indication information, where different instances of differential CQI indication information correspond to different differential amounts, respectively, that is, one instance of differential CQI indication information corresponds to one differential amount. As shown in Table 6, in a case where a value indicated by the differential CQI indication information is 0, a differential amount is also 0. In a case where a value indicated by the differential CQI indication information is 1, a differential amount is also 1. In a case where a value indicated by the differential CQI indication information is 2, a differential amount is greater than or equal to 2, for example, the differential amount may be 4. In a case where a value indicated by the differential CQI indication information is 3, a differential amount is less than or equal to -1, for example, the differential amount may be -2.

It should be noted that the above differential amount ≥ 2 means that the differential amount may be any value greater than or equal to 2, and the differential amount ≤ -1 means that the differential amount may be any value less than or equal to -1, which may be specified by a protocol, and the embodiments of the present disclosure are not limited thereto.

**Table 6**

| differential CQI Indication Information | differential amount |
|---|---|
| 0 | 0 |
| 1 | 1 |
| 2 | ≥ 2 |
| 3 | ≤ -1 |

Taking Table 6 as an example, in a case where the first differential amount is 1 and the reference wideband CQI is 8, a wideband CQI corresponding to another CSI-RS resource in the first CSI-RS resources is 9.

The above manner of reporting the differential amount through the differential CQI indication information may reduce the amount of data reported by the terminal device, thereby further reducing feedback overhead of the terminal device.

In some embodiments, the second information may further include eleventh indication information indicating a second differential amount, and the second differential amount may include, for each CSI-RS resource among the first CSI-RS resources, a differential amount between a sub-band CQI and a wideband CQI corresponding to the CSI-RS resource.

For example, for each CSI-RS resource in the first CSI-RS resources, the wideband CQI and sub-band CQI corresponding to the CSI-RS resource may be determined, and the differential amount between the sub-band CQI and the wideband CQI may be calculated to obtain the second differential amount.

It should be noted that, for the description of the second differential amount, reference may be made to the above description for the first differential amount, and thus the description thereof is omitted herein.

In some embodiments, the second information may include twelfth indication information, and the twelfth indication information indicates quantities of non-zero coefficients of a plurality of data transmission layers corresponding to the first CSI-RS resources.

In some embodiments, the twelfth indication information may indicate the quantity of non-zero wideband amplitude coefficients of the Rel-15 Type II codebook.

In some embodiments, for each data transmission layer, the quantity of non-zero coefficients corresponding to each CSI-RS resource in the first CSI-RS resources may be reported separately.

In some embodiments, the twelfth indication information may include a plurality of instances of thirteenth indication information, and different instances of thirteenth indication information indicate quantities of non-zero coefficients of different data transmission layers corresponding to different CSI-RS resources, respectively.

For example, for each data transmission layer, quantities of non-zero coefficients respectively corresponding to the CSI-RS resources may be indicated, that is, one quantity of non-zero coefficients is reported for one CSI-RS resource. In a case where the quantity of data transmission layers is 2, and the first CSI-RS resources include 2 CSI-RS resources, for a first one of the data transmission layers, the quantities of non-zero coefficients respectively corresponding to the 2 CSI-RS resources may be reported, and for a second one of data transmission layers, the quantities of non-zero coefficients respectively corresponding to the 2 CSI-RS resources may also be reported.

In some embodiments, the twelfth indication information includes fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

In some embodiments, the first reference quantity may be determined by: determining the quantities of non-zero coefficients of the data transmission layer respectively corresponding to the CSI-RS resources in the first CSI-RS resources and obtaining a plurality of first quantities; and determining the first reference quantity based on the plurality of first quantities.

It should be noted that the above manner for determining the first reference quantity is for one data transmission layer, and for any one data transmission layer, the first reference quantity corresponding to this data transmission layer may be determined in the above manner.

In some embodiments, determining the first reference quantity based on the plurality of first quantities includes:
taking a maximum value among the plurality of first quantities as the first reference quantity;
taking a minimum value among the plurality of first quantities as the first reference quantity; or
taking an average value of the plurality of first quantities as the first reference quantity.

For example, for each data transmission layer, the quantities of non-zero coefficients of the data transmission layer respectively corresponding to CSI-RS resources in the first CSI-RS resources may be determined to obtain multiple first quantities, and the maximum value of the multiple first quantities is used as the first reference quantity corresponding to the data transmission layer. Next, differences between the respective first quantities and the first reference quantity may be determined.

In a case where the quantity of data transmission layers is 2 and the first CSI-RS resources include CSI-RS resource 1 and CSI-RS resource 2, for a first one of the data transmission layer, a first quantity of non-zero coefficients of the first one of the data transmission layers corresponding to CSI-RS resource 1 and a first quantity of non-zero coefficients of the first one of the data transmission layers corresponding to CSI-RS resource 2 may be determined. In a case where the first quantity corresponding to CSI-RS resource 1 is determined as a maximum value, the first quantity corresponding to CSI-RS resource 1 is determined as the first reference quantity. Next, a difference between the first quantity corresponding to CSI-RS resource 2 and the first reference quantity may be determined. For a second one of the data transmission layer, a difference may be determined according to the same manner described above.

In some embodiments, a bitwidth of the fourteenth indication information and a bitwidth of the fifteenth indication information are determined based on a quantity of spatial domain basis vectors.

In an implementation, the bitwidth of the fourteenth indication information may be $X = \left⌈{log}_{2}\left(2L-1\right)\right⌉$ bits, where L is the quantity of the spatial basis vectors, and the bitwidth of the fifteenth indication information may be $\left⌈{log}_{2}\left(L\right)\right⌉$ bits.

In some embodiments, the second information may further include sixteenth indication information, and the sixteenth indication information indicates a CSI-RS resource corresponding to the first reference quantity.

In an implementation, in a case where the first reference quantity is the maximum value or the minimum value among multiple first quantities, the CSI-RS resource corresponding to the first reference quantity may be reported to the network device.

It should be noted that in a case where the first reference quantity is an average of multiple first quantities, a CSI-RS resource corresponding to the first reference quantity may not be reported to the network device, that is, the second information may not include the sixteenth indication information.

In some embodiments, a bitwidth of the sixteenth indication information is determined based on the quantity of the plurality of CSI-RS resources.

In an implementation, the bitwidth of the sixteenth indication information may be $\left⌈{log}_{2}\left({K}_{s}\right)\right⌉$ bits.

In some embodiments, the second information may include a plurality of instances of seventeenth indication information, and different instances of seventeenth indication information indicate quantities of non-zero coefficients of all data transmission layers corresponding to different CSI-RS resources, respectively.

In some embodiments, the seventeenth indication information may indicate the quantity of non-zero coefficients of the Rel-16/17 Type II codebook.

In some embodiments, "the quantity of non-zero coefficients of all data transmission layers" may be understood as "a sum of the quantities of non-zero coefficients of all data transmission layers".

For example, the quantity of data transmission layers is 2, and the first CSI-RS resources include CSI-RS resource 1 and CSI-RS resource 2, for CSI-RS resource 1, the quantity of non-zero coefficients of the first one of the data transmission layers corresponding to CSI-RS resource 1 and the quantity of non-zero coefficients of the second one of the data transmission layers corresponding to CSI-RS resource 1 may be determined, and the sum of the two quantities may be used as the quantity of non-zero coefficients of all data transmission layers corresponding to CSI-RS resource 1. According to the same manner described above, the quantity of non-zero coefficients of all data transmission layers corresponding to CSI-RS resource 2 may also be obtained, thereby obtaining the seventeenth indication information.

In some embodiments, the twelfth indication information may include eighteenth indication information and nineteenth indication information, the eighteenth indication information may indicate a second reference quantity corresponding to the plurality of data transmission layers, and the nineteenth indication information may indicate differences between the second reference quantity and quantities of non-zero coefficients of all data transmission layers respectively corresponding to CSI-RS resources in the first CSI-RS resources.

In some embodiments, "multiple data transmission layers" may be understood as "all data transmission layers".

In some embodiments, the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

In some embodiments, determining the second reference quantity based on the plurality of second quantities includes:
taking a maximum value among the plurality of second quantities as the second reference quantity;
taking a minimum value among the plurality of second quantities as the second reference quantity; or
taking an average value of the plurality of second quantities as the second reference quantity.

For example, for each CSI-RS resource in the first CSI-RS resources, the first quantities of non-zero coefficients of the data transmission layers corresponding to the CSI-RS resource may be determined, and the sum of multiple first quantities is used as the second quantity of non-zero coefficients of all data transmission layers corresponding to the CSI-RS resource to obtain multiple second quantities, and the maximum value of the multiple second quantities is used as the second reference quantity. Next, differences between the respective second quantities and the second reference quantity may be determined.

In a case where the quantity of data transmission layers is 2 and the first CSI-RS resources include CSI-RS resource 1 and CSI-RS resource 2, for CSI-RS resource 1, a first quantity of non-zero coefficients of a first data transmission layer corresponding to CSI-RS resource 1 and a first quantity of non-zero coefficients of a second data transmission layer corresponding to CSI-RS resource 1 may be determined, and a sum of the two first quantities may be determined to obtain a second quantity of non-zero coefficients of all data transmission layers corresponding to CSI-RS resource 1. A second quantity of non-zero coefficients of all data transmission layers corresponding to CSI-RS resource 2 may be determined based on the same manner. In a case where the second reference quantity is a minimum value among the plurality of second quantities, and the second quantity of non-zero coefficients of all data transmission layers corresponding to CSI-RS resource 1 is greater than the second quantity of non-zero coefficients of all data transmission layers corresponding to CSI-RS resource 2, the second quantity of non-zero coefficients of all data transmission layers corresponding to CSI-RS resource 2 may be determined as the second reference quantity. Next, a difference between the second quantity of non-zero coefficients of all data transmission layers corresponding to CSI-RS resource 1 and the second reference quantity may be determined.

In some embodiments, a bitwidth of the eighteenth indication information and a bitwidth of the nineteenth indication information are determined based on a maximum quantity of non-zero coefficients allowed by all data transmission layers corresponding to the first CSI-RS resources.

In an implementation, the bitwidth of the eighteenth indication information may be $\left⌈{log}_{2}\left({K}_{0}\right)\right⌉$ bits or $\left⌈{log}_{2}\left(2{K}_{0}\right)\right⌉$ bits, and the bitwidth of the nineteenth indication information may be $\left⌈{log}_{2}\left({K}_{0}/2\right)\right⌉$ bits or $\left⌈{log}_{2}\left({K}_{0}\right)\right⌉$ bits, wherein *K*₀ is the maximum quantity of non-zero coefficients allowed by all data transmission layers corresponding to the first CSI-RS resources.

In some embodiments, the second information may further include twentieth indication information, and the twentieth indication information indicates a CSI-RS resource corresponding to the second reference quantity.

In an implementation, in a case where the second reference quantity is the maximum value or the minimum value among multiple second quantities, the CSI-RS resource corresponding to the second reference quantity may be reported to the network device.

It should be noted that in a case where the second reference quantity is an average of multiple second quantities, a CSI-RS resource corresponding to the second reference quantity may not be reported to the network device, that is, the second information may not include the twentieth indication information.

In some embodiments, a bitwidth of the twentieth indication information is determined based on the quantity of the plurality of CSI-RS resources.

In some embodiments, the bitwidth of the twentieth indication information may be $\left⌈{log}_{2}\left({K}_{s}\right)\right⌉$ bits.

The method in the embodiments of the present disclosure may include at least one of the steps S2101 to S2103. For example, step S2101 may be implemented as an independent embodiment, step S2103 may be implemented as an independent embodiment, and steps S2102+S2103 may be implemented as independent embodiments.

In some embodiments, the above steps S2101 to S2103 are all optional steps.

In some embodiments, reference may be made to other optional implementations recorded before or after the description corresponding to FIG. 2.

With the above method, the terminal device can feed back the plurality of measurement results at one time, thereby reducing the feedback overhead of the terminal device while ensuring the system performance.

In some embodiments, names of information, etc., are not limited to the names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., can be used interchangeably.

In some embodiments, terms such as "obtain", "acquire", "get", "receive", "transmit", "bidirectional transmission", "send and/or receive" can be used interchangeably. They can be interpreted as receiving from another entity, obtaining from a protocol, obtaining from a higher layer, obtaining through its own processing, self-implementation, and other meanings.

In some embodiments, terms such as "send", "transmit", "report", "deliver", "transmit", "bidirectional transmission", "send and/or receive" can be used interchangeably.

In some embodiments, terms such as "certain", "predetermined", "preset", "set", "indicated", "some", "any", and "first" can be used interchangeably, and "specific A", " predetermined A", "preset A", "set A", "indicated A", "some A", "any A", and "first A" can be interpreted as A pre-defined in a protocol, etc., or as A obtained through setting, configuration, or indication, etc., and can also be interpreted as specific A, some A, any A, or first A, etc., but is not limited thereto.

FIG. 3 is a schematic flow chart of an information reporting method according to an embodiment of the present disclosure. As shown in FIG. 3, an embodiment of the present disclosure relates to an information reporting method, which may be performed by a terminal device. The method may include the following steps.

In step S3101, first information configured by a network device is obtained.

For optional implementations of step S3101, reference may be made to optional implementations of step S2101 in FIG. 2 and other related parts in the embodiments related to FIG. 2, and thus the description thereof is omitted herein.

In some embodiments, the terminal device may receive the first information configured by the network device, but is not limited thereto, and the terminal device may also receive first information configured by another entity.

In some embodiments, the terminal device may obtain first information specified by a protocol.

In some embodiments, the terminal device may obtain the first information from an upper layer(s).

In some embodiments, the terminal device may perform processing to obtain the first information.

In step S3102, measurement is performed based on the plurality of CSI-RS resources and a plurality of measurement results is obtained.

For optional implementations of step S3102, reference may be made to the optional implementations of step S2102 in FIG. 2 and other related parts in the embodiments related to FIG. 2, and thus the description thereof is omitted herein.

In step S3103, the second information is reported.

For optional implementations of step S3103, reference may be made to the optional implementations of step S2103 in FIG. 2 and other related parts in the embodiments related to FIG. 2, and thus the description thereof is omitted herein.

In some embodiments, the terminal device may report the second information to the network device, but is not limited thereto, and the terminal device may also report the second information to another entity.

In some embodiments, the second information includes first indication information indicating first CSI-RS resources, and the first CSI-RS resources include a first quantity of CSI-RS resources among the plurality of CSI-RS resources.

In some embodiments, a bitwidth of the first indication information is *Kₛ*, and *Kₛ* is a quantity of the plurality of CSI-RS resources.

In some embodiments, a bitwidth of the first indication information is $\left⌈{log}_{2}^{{C}_{{K}_{s}}^{M}}\right⌉$, *Kₛ* is a quantity of the plurality of CSI-RS resources, and M is the first quantity.

In some embodiments, the second information further includes second indication information indicating the first quantity.

In some embodiments, the method further includes receiving third information sent from the network device, in which the third information indicates the first quantity.

In some embodiments, the second information includes third indication information, and the third indication information indicates a rank indicator (RI) corresponding to the first CSI-RS resources.

In some embodiments, a bitwidth of the third indication information is determined based on a second quantity, and the second quantity is a number of layers allowed by the network device for reporting.

In some embodiments, the first indication information includes a plurality of instances of fourth indication information, and different instances of fourth indication information indicate RIs corresponding to different CSI-RS resources in the first CSI-RS resources, respectively.

In some embodiments, the first indication information includes fifth indication information indicating a combination index of a first RI combination, and the first RI combination is a combination of RIs corresponding to the first CSI-RS resources.

In some embodiments, a bitwidth of the fifth indication information is determined based on a quantity of second RI combinations, the second RI combinations include a combination of first RIs corresponding to the first CSI-RS resources, and the first RIs each includes an RI that is less than or equal to a maximum RI corresponding to the first CSI-RS resources.

In some embodiments, the second information includes sixth indication information, and the sixth indication information indicates a layer indicator (LI) corresponding to the first CSI-RS resources.

In some embodiments, a bitwidth of the sixth indication information is determined based on a third quantity, and the third quantity is a number of layers that the terminal device is capable for reporting.

In some embodiments, the second information includes seventh indication information, and the seventh indication information indicates a channel quality indicator (CQI) corresponding to the first CSI-RS resources.

In some embodiments, the seventh indication information includes a plurality of instances of eighth indication information, and different instances of eighth indication information indicate wideband CQIs corresponding to different CSI-RS resources, respectively.

In some embodiments, the seventh indication information includes ninth indication information and tenth indication information, the ninth indication information indicates a reference wideband CQI, and the tenth indication information indicates a first differential amount. The first differential amount includes differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources. The second CSI-RS resources include CSI-RS resources in the first CSI-RS resources other than a reference CSI-RS resource.

In some embodiments, the reference wideband CQI is a wideband CQI corresponding to the reference CSI-RS resource, or an average value of second wideband CQIs corresponding to a plurality of CSI-RS resources in the first CSI-RS resources.

In some embodiments, the method further includes determining the reference CSI-RS resource according to a first rule, in which the first rule is specified by a protocol or indicated by the network device.

In some embodiments, the second information further includes eleventh indication information indicating a second differential amount, and the second differential amount includes, for each CSI-RS resource among the first CSI-RS resources, a differential amount between a sub-band CQI and a wideband CQI corresponding to the CSI-RS resource.

In some embodiments, the second information includes twelfth indication information, and the twelfth indication information indicates quantities of non-zero coefficients of a plurality of data transmission layers corresponding to the first CSI-RS resources.

In some embodiments, the twelfth indication information includes a plurality of instances of thirteenth indication information, and different instances of thirteenth indication information indicate quantities of non-zero coefficients of different data transmission layers corresponding to different CSI-RS resources, respectively.

In some embodiments, the twelfth indication information includes fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

In some embodiments, the first reference quantity is determined by:
determining the quantities of non-zero coefficients of the data transmission layer respectively corresponding to the CSI-RS resources in the first CSI-RS resources and obtaining a plurality of first quantities; and
determining the first reference quantity based on the plurality of first quantities.

In some embodiments, determining the first reference quantity based on the plurality of first quantities includes:
taking a maximum value among the plurality of first quantities as the first reference quantity;
taking a minimum value among the plurality of first quantities as the first reference quantity; or
taking an average value of the plurality of first quantities as the first reference quantity.

In some embodiments, a bitwidth of the fourteenth indication information and a bitwidth of the fifteenth indication information are determined based on a quantity of spatial domain basis vectors.

In some embodiments, the second information further includes sixteenth indication information, and the sixteenth indication information indicates a CSI-RS resource corresponding to the first reference quantity.

In some embodiments, a bitwidth of the sixteenth indication information is determined based on the quantity of the plurality of CSI-RS resources.

In some embodiments, the second information includes a plurality of instances of seventeenth indication information, and different instances of seventeenth indication information indicate quantities of non-zero coefficients of all data transmission layers corresponding to different CSI-RS resources, respectively.

In some embodiments, the twelfth indication information includes eighteenth indication information and nineteenth indication information, the eighteenth indication information indicates a second reference quantity corresponding to the plurality of data transmission layers, and the nineteenth indication information indicates differences between the second reference quantity and quantities of non-zero coefficients of all data transmission layers respectively corresponding to CSI-RS resources in the first CSI-RS resources.

In some embodiments, the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

In some embodiments, determining the second reference quantity based on the plurality of second quantities includes:
taking a maximum value among the plurality of second quantities as the second reference quantity;
taking a minimum value among the plurality of second quantities as the second reference quantity; or
taking an average value of the plurality of second quantities as the second reference quantity.

In some embodiments, a bitwidth of the eighteenth indication information and a bitwidth of the nineteenth indication information are determined based on a maximum quantity of non-zero coefficients allowed by all data transmission layers corresponding to the first CSI-RS resources.

In some embodiments, the second information further includes twentieth indication information, and the twentieth indication information indicates a CSI-RS resource corresponding to the second reference quantity.

In some embodiments, a bitwidth of the twentieth indication information is determined based on the quantity of the plurality of CSI-RS resources.

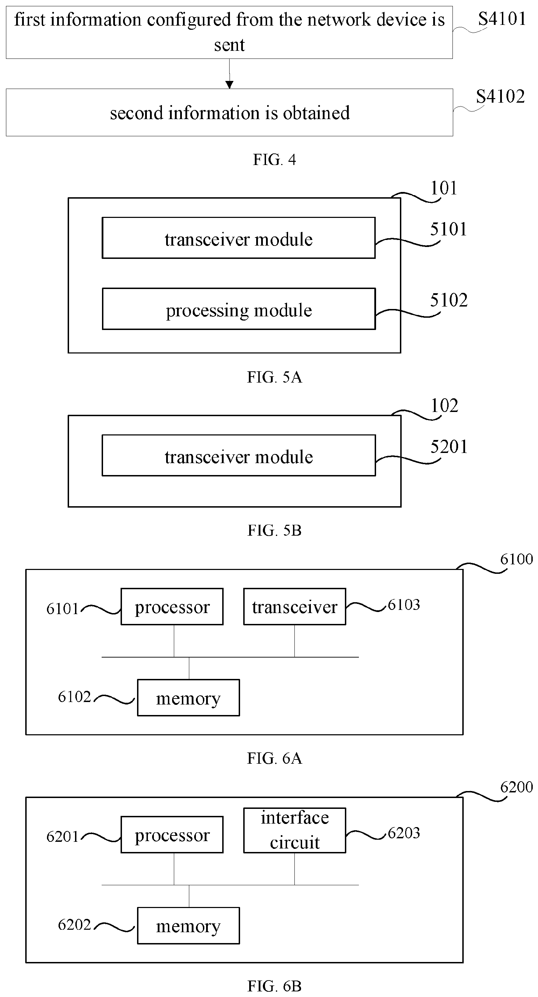

FIG. 4 is a schematic flow chart of an information reporting method according to an embodiment of the present disclosure. As shown in FIG. 4, the embodiment of the present disclosure relates to an information reporting method, which may be performed by a network device. The method may include the following steps.

In step S4101, first information configured by the network device is sent.

For optional implementations of step S4101, reference may be made to the optional implementations of step S2101 in FIG. 2 and other related parts in the embodiments related to FIG. 2, and thus the description thereof is omitted herein.

In some embodiments, the network device may send the configured first information to the terminal device, but is not limited thereto, and the network device may also send the configured first information to another entity.

In step S4102, second information is obtained.

For optional implementations of step S4102, reference may be made to the optional implementations of step S2103 in FIG. 2 and other related parts in the embodiments related to FIG. 2, and thus the description thereof is omitted herein.

In some embodiments, the network device may receive the second information sent from the terminal device, but is not limited thereto, and the network device may also receive the second information sent from another entity.

In some embodiments, the second information includes first indication information indicating first CSI-RS resources, and the first CSI-RS resources include a first quantity of CSI-RS resources among the plurality of CSI-RS resources.

In some embodiments, a bitwidth of the first indication information is *Kₛ*, and *Kₛ* is a quantity of the plurality of CSI-RS resources.

In some embodiments, a bitwidth of the first indication information is $\left⌈{log}_{2}^{{C}_{{K}_{s}}^{M}}\right⌉$, *Kₛ* is a quantity of the plurality of CSI-RS resources, and M is the first quantity.

In some embodiments, the second information further includes second indication information indicating the first quantity.

In some embodiments, the method further includes sending third information to the terminal device, in which the third information indicates the first quantity.

In some embodiments, the second information includes third indication information, and the third indication information indicates a rank indicator (RI) corresponding to the first CSI-RS resources.

In some embodiments, a bitwidth of the third indication information is determined based on a second quantity, and the second quantity is a number of layers allowed by the network device for reporting.

In some embodiments, the first indication information includes a plurality of instances of fourth indication information, and different instances of fourth indication information indicate RIs corresponding to different CSI-RS resources in the first CSI-RS resources, respectively.

In some embodiments, the first indication information includes fifth indication information indicating a combination index of a first RI combination, and the first RI combination is a combination of RIs corresponding to the first CSI-RS resources.

In some embodiments, a bitwidth of the fifth indication information is determined based on a quantity of second RI combinations, the second RI combinations include a combination of first RIs corresponding to the first CSI-RS resources, and the first RIs each includes an RI that is less than or equal to a maximum RI corresponding to the first CSI-RS resources.

In some embodiments, the second information includes sixth indication information, and the sixth indication information indicates a layer indicator (LI) corresponding to the first CSI-RS resources.

In some embodiments, a bitwidth of the sixth indication information is determined based on a third quantity, and the third quantity is a number of layers that the terminal device is capable for reporting.

In some embodiments, the second information includes seventh indication information, and the seventh indication information indicates a channel quality indicator (CQI) corresponding to the first CSI-RS resources.

In some embodiments, the seventh indication information includes a plurality of instances of eighth indication information, and different instances of eighth indication information indicate wideband CQIs corresponding to different CSI-RS resources, respectively.

In some embodiments, the seventh indication information includes ninth indication information and tenth indication information, the ninth indication information indicates a reference wideband CQI, and the tenth indication information indicates a first differential amount. The first differential amount includes differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources. The second CSI-RS resources include CSI-RS resources in the first CSI-RS resources other than a reference CSI-RS resource.

In some embodiments, the reference wideband CQI is a wideband CQI corresponding to the reference CSI-RS resource, or an average value of second wideband CQIs corresponding to a plurality of CSI-RS resources in the first CSI-RS resources.

In some embodiments, the reference CSI-RS resource is determined according to a first rule, in which the first rule is specified by a protocol or indicated by the network device.

In some embodiments, the second information further includes eleventh indication information indicating a second differential amount, and the second differential amount includes, for each CSI-RS resource among the first CSI-RS resources, a differential amount between a sub-band CQI and a wideband CQI corresponding to the CSI-RS resource.

In some embodiments, the second information includes twelfth indication information, and the twelfth indication information indicates quantities of non-zero coefficients of a plurality of data transmission layers corresponding to the first CSI-RS resources.

In some embodiments, the twelfth indication information includes a plurality of instances of thirteenth indication information, and different instances of thirteenth indication information indicate quantities of non-zero coefficients of different data transmission layers corresponding to different CSI-RS resources, respectively.

In some embodiments, the twelfth indication information includes fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

In some embodiments, the first reference quantity is determined by:
determining the quantities of non-zero coefficients of the data transmission layer respectively corresponding to the CSI-RS resources in the first CSI-RS resources and obtaining a plurality of first quantities; and
determining the first reference quantity based on the plurality of first quantities.

In some embodiments, determining the first reference quantity based on the plurality of first quantities includes:
taking a maximum value among the plurality of first quantities as the first reference quantity;
taking a minimum value among the plurality of first quantities as the first reference quantity; or
taking an average value of the plurality of first quantities as the first reference quantity.

In some embodiments, a bitwidth of the fourteenth indication information and a bitwidth of the fifteenth indication information are determined based on a quantity of spatial domain basis vectors.

In some embodiments, the second information further includes sixteenth indication information, and the sixteenth indication information indicates a CSI-RS resource corresponding to the first reference quantity.

In some embodiments, a bitwidth of the sixteenth indication information is determined based on the quantity of the plurality of CSI-RS resources.

In some embodiments, the second information includes a plurality of instances of seventeenth indication information, and different instances of seventeenth indication information indicate quantities of non-zero coefficients of all data transmission layers corresponding to different CSI-RS resources, respectively.

In some embodiments, the twelfth indication information includes eighteenth indication information and nineteenth indication information, the eighteenth indication information indicates a second reference quantity corresponding to the plurality of data transmission layers, and the nineteenth indication information indicates differences between the second reference quantity and quantities of non-zero coefficients of all data transmission layers respectively corresponding to CSI-RS resources in the first CSI-RS resources.

In some embodiments, the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

In some embodiments, determining the second reference quantity based on the plurality of second quantities includes:
taking a maximum value among the plurality of second quantities as the second reference quantity;
taking a minimum value among the plurality of second quantities as the second reference quantity; or
taking an average value of the plurality of second quantities as the second reference quantity.

In some embodiments, a bitwidth of the eighteenth indication information and a bitwidth of the nineteenth indication information are determined based on a maximum quantity of non-zero coefficients allowed by all data transmission layers corresponding to the first CSI-RS resources.

In some embodiments, the second information further includes twentieth indication information, and the twentieth indication information indicates a CSI-RS resource corresponding to the second reference quantity.

In some embodiments, a bitwidth of the twentieth indication information is determined based on the quantity of the plurality of CSI-RS resources.

In some embodiments, it is assumed that the terminal device reports N>1 CRIs. The network device configures *Kₛ* CSI-RS resources for the terminal device.

In some embodiments, the reporting of CRI indication may include the following options.

Option 1, selected M CSI-RS resources are indicated through a bitmap of *Kₛ* bits,

Option 2, the M CSI-RS resources are indicated through $\left⌈{log}_{2}^{{C}_{{K}_{s}}^{M}}\right⌉$ bits.

M may be configured by the network device to the terminal device, or may be reported by the terminal device to the network device. ${C}_{{K}_{s}}^{M}$ represents a combinatorial calculation for selecting M CSI-RS resources from *Kₛ* resources. In a case where M is reported by the terminal device to the network device, and option 2 is adopted for indication, additional $\left⌈{log}_{2}^{{K}_{s}}\right⌉$ bits need to be reported to indicate the quantity M of CSI-RS resources selected by the terminal device.

In some embodiments, the reporting of RI or LI indication may include the following options.

Option 1, only one corresponding RI/LI for all CSI-RS resources is reported, where a bitwidth of indication information of RI is $\left⌈{log}_{2} {n}_{RI}\right⌉$ bits, or $min \left(1, \left⌈{log}_{2} {n}_{RI}\right⌉\right)$ bit, or $min \left(2, \left⌈{log}_{2} {n}_{RI}\right⌉\right)$ bits; and a bitwidth of indication information of LI is $\left⌈{log}_{2} υ\right⌉$, or $min \left(2, \left⌈{log}_{2} v\right⌉\right)$.

Option 2, respective RIs for the CSI-RS resources are reported.

Option 2-1, the respective RIs for the CSI-RS resources are indicated by using the manner described in Option 1.

Option 2-2, joint coding indication is performed on RIs respectively corresponding to multiple CSI-RS resources. Assuming that the quantity of combinations after joint coding is X, $\left⌈{log}_{2} X\right⌉$ bits are required to indicate the respective RIs for the CSI-RS resources. For example, RIs corresponding to two CSI-RS resources are reported, corresponding combinations include (1,1), (1,2), (2,1) and (2,2), i.e., four combinations in total, and accordingly 2 bits are required to indicate indexes of the combinations.

In some embodiments, the reporting of CQI indication includes the following options.

### (1) Wideband CQI reporting

Option 1, one wideband CQI for one CSI-RS resource is reported independently.

Option 2, wideband CQIs respectively corresponding to the CSI-RS resources are reported in a differential manner. A CQI corresponding to a reference resource is used as a reference wideband CQI, and wideband CQIs respectively corresponding to other resources are obtained by differential calculation with respect to the reference CQI, and are reported through b bits, while the reference CQI is reported through a bits. The reference resource may be a predefined CSI-RS resource, for example, a CSI-RS resource corresponding to a first one of the reported CRIs. Optionally, the reference wideband CQI may also be an arithmetic mean of CQIs corresponding to the reported multiple CRIs.

### (2) Sub-band CQI reporting

A sub-band CQI is obtained by differential calculation of wideband CQIs corresponding to the same CSI-RS resource, and is reported through c bits.

In some embodiments, the reporting of the indication of the quantity of non-zero coefficients includes the following options.

### (1) Manner of indicating the quantity of non-zero wideband amplitude coefficients for Rel-15 Type II codebook

Option 1-1, for each data transmission layer, the quantity of non-zero wideband amplitude coefficients corresponding to each CSI-RS resource is indicated and reported.

Option 1-2, for each data transmission layer, a minimum value, a maximum value, or an average value of quantities of non-zero wideband amplitude coefficients is indicated by using $X = \left⌈{log}_{2}\left(2L-1\right)\right⌉$ bits, and differences between the quantities of non-zero wideband amplitude coefficients and the minimum value, the maximum value or the average value are indicated by using Y bits, where Y may be $\left⌈{log}_{2}\left(L\right)\right⌉$ bits. In a case where the X bits indicate the minimum value or the maximum value, $Z = \left⌈{log}_{2}\left({K}_{s}\right)\right⌉$ bits are further required to indicate which resource corresponds to the quantity of non-zero wideband coefficients that is the maximum value or the minimum value.

### (2) Manner of indicating the quantity of non-zero coefficients for Rel-16/17 Type II codebook

Option 2-1, the quantity of non-zero coefficients of all layers corresponding to each CSI-RS resource is indicated and reported.

Option 2-2, a minimum value, a maximum value, or an average value of quantities of non-zero coefficients of all layers is indicated by using $X = \left⌈{log}_{2}\left({K}_{0}\right)\right⌉$ or $\left⌈{log}_{2}\left(2{K}_{0}\right)\right⌉$ bits, and differences between the quantities of non-zero coefficients and the minimum value, the maximum value or the average value are indicated by using Y bits, where Y may be $\left⌈{log}_{2}\left({K}_{0}/2\right)\right⌉$ bits or $\left⌈{log}_{2}\left({K}_{0}\right)\right⌉$ bits. In a case where the X bits indicate the minimum value or the maximum value, $Z = \left⌈{log}_{2}\left({K}_{s}\right)\right⌉$ bits are further required to indicate which resource corresponds to the quantity of non-zero wideband coefficients that is the maximum value or the minimum value.

### Example 1

It is assumed that a gNB configures *Kₛ* = 4 CSI-RS resources for UE, with CSI-RS resource IDs of 1, 2, 3 and 4, respectively. In a case where the above option 1 is adopted, the UE may perform indication through a bitmap of 4 bits as shown in Table 5. In Table 5, "1" indicates that RI/PMI/CQI corresponding to a resource is reported, otherwise, the RI/PMI/CQI corresponding to the resource is not reported. The indication of the bitmap in Table 5 corresponds sequentially to CSI-RS resources according to an order of the CSI-RS resource IDs from small to large or from large to small. For example, the least significant bit in the bitmap corresponds to CSI-RS ID1, and the most significant bit in the bitmap corresponds to CSI-RS ID4. Therefore, according to the indication of the bitmap, it is determined that the UE reports only the RI/PMI/CQI corresponding to CSI-RS ID2 and CSI-RS ID3.

### Example 2

It is assumed that the UE reports CQIs corresponding to two CRIs, and a wideband CQI corresponding to a CSI-RS with the smallest CSI-RS resource ID is predefined as the reference wideband CQI, and is quantized by a = 4 bits. A wideband CQI corresponding to the other resource is quantized differentially by using 2 bits. It is assumed that a differential quantization table is as shown in Table 6. In a case where a value indicated by the wideband differential quantization is 1 and a value indicated by the reference wideband quantization is 8, the wideband CQI of the other resource is 9. A sub-band differential CQI corresponding to one resource is calculated based on the value indicated by the differential quantization and the value indicated by the wideband CQI corresponding thereto, and a calculation operation is similar to the above wideband differential quantization operation.

### Example 3

It is assumed that a gNB configures *Kₛ* = 4 CSI-RS resources for UE.

For reporting the quantity of non-zero coefficients of the Rel-15 Type II codebook, the quantity of spatial domain basis vectors configured by the gNB to the UE is set as L = 4. It is further assumed that the UE reports the indication of the quantities of non-zero wideband coefficients corresponding to two CRIs, and RI corresponding to each CRI is 1, that is, each is used for one data transmission layer. The quantities of non-zero coefficients corresponding to the two CRIs are 4 and 6, respectively. The minimum value is predefined to be indicated by $X = \left⌈{log}_{2}\left(2L-1\right)\right⌉ = 3$ bits to indicate that its value is 4, and the UE further indicates, by $Z = \left⌈{log}_{2}\left({K}_{s}\right)\right⌉$ =2 bits, which resource corresponds to the quantity of non-zero wideband coefficients that is the minimum value. next, the quantity of non-zero wideband coefficients corresponding to the other CRI is indicated by $Y = \left⌈{log}_{2}\left(L\right)\right⌉ = 2$ bits to indicate that a difference therebetween is 2, and thus the quantity of non-zero coefficients is calculated as 4 + 2 = 6.

For reporting the quantity of non-zero coefficients of the Rel-16 or 17 Type II codebook, the reporting of the indication of the quantity of non-zero coefficients is similar to the above manner for indicating the quantity of non-zero wideband coefficients per layer of the Rel-15 Type II codebook.

In some embodiments of the present disclosure, a communication system is provided, which may include a terminal device and a network device. The terminal device may perform the information reporting method performed by the terminal device in the aforementioned embodiments of the present disclosure. The network device may perform the information reporting method performed by the network device in the aforementioned embodiments of the present disclosure.

The embodiments of the present disclosure further provide an apparatus for implementing any of the above methods. For example, an apparatus is provided, and the apparatus includes units or modules for implementing the steps executed by the terminal device in any of the above methods. As another example, another apparatus is provided, including units or modules for implementing the steps executed by the network device (such as an access network device, a core network function node, a core network device, etc.) in any of the above methods.

As can be appreciated, the division of units or modules in the above apparatus is only a division of logical functions. In actual implementation, they can be fully or partially integrated into one physical entity, or can be physically separate. In addition, the units or modules in the apparatus can be implemented in the form of software called by a processor. For example, the apparatus includes a processor, the processor is connected to a memory, instructions are stored in the memory, and the processor calls the instructions stored in the memory to implement any of the above methods or to implement the functions of the units or modules of the above apparatus, where the processor is, for example, a general-purpose processor, such as a Central Processing Unit (CPU) or microprocessor, and the memory is a memory inside or outside the apparatus. Alternatively, the units or modules in the apparatus can be implemented in the form of hardware circuits. The functions of some or all units or modules can be implemented through the design of the hardware circuits. The hardware circuits can be understood as one or more processors. For example, in one implementation, the hardware circuits are application-specific integrated circuits (ASICs), and by designing the logical relationships of the circuit elements, the functions of some or all of the units or modules described above are implemented. As another example, in another implementation, the hardware circuits can be implemented by programmable logic devices (PLDs). Taking Field Programmable Gate Arrays (FPGAs) as an example, they can include a large number of logic gates, and the connection relationships between the logic gates are configured through configuration files to implement the functions of some or all of the units or modules described above. All units or modules of the above apparatus can be fully implemented in the form of software called by a processor, or fully implemented in the form of hardware circuits, or partially implemented in the form of software called by a processor and the remaining part implemented in the form of hardware circuits.

In the embodiments of the present disclosure, a processor is a circuit with signal processing capability. In one implementation, the processor can be a circuit with instruction reading and execution capability, such as a Central Processing Unit (CPU), microprocessor, graphics processing unit (GPU) (which can be understood as a microprocessor), or digital signal processor (DSP), etc. In another implementation, the processor can implement certain functions through the logical relationships of hardware circuits. The logical relationships of the hardware circuits can be fixed or reconfigurable. For example, the processor can be a hardware circuit implemented by an application-specific integrated circuit (ASIC) or a programmable logic device (PLD), such as an FPGA. In reconfigurable hardware circuits, the process of the processor loading configuration files to implement hardware circuit configuration can be understood as the processor loading instructions to implement the functions of some or all of the units or modules described above. In addition, it can also be a hardware circuit designed for artificial intelligence, which can be understood as an ASIC, such as a Neural Network Processing Unit (NPU), Tensor Processing Unit (TPU), Deep learning Processing Unit (DPU), etc.

FIG. 5A is a schematic structural diagram of a terminal device according to an embodiment of the present disclosure. As shown in FIG. 5A, the terminal device 101 may include at least one of a transceiver module 5101 or a processing module 5102. In some embodiments, the transceiver module 5101 is configured to receive first information configured by a network device, in which the first information at least includes a plurality of channel state information reference signal (CSI-RS) resources. The processing module 5102 is configured to perform measurement based on the plurality of CSI-RS resources and obtain a plurality of measurement results. The transceiver module 5101 is further configured to report second information to the network device, in which the second information indicates the plurality of measurement results. Optionally, the transceiver module 5101 may be configured to perform at least one of the communication steps such as sending and/or receiving performed by the terminal device 101 in any of the above methods (for example, step S2101, but not limited thereto), and thus the description thereof is omitted herein. Optionally, the processing module 5102 may be configured to perform at least one of the other steps (for example, step S2102, but not limited thereto) performed by the terminal device 101 in any of the above methods, and thus the description thereof is omitted herein.

In some embodiments, the transceiver module may include a sending module and/or a receiving module. The sending module and receiving module may be separate or integrated. Optionally, terms such as transceiver module and transceiver may be used interchangeably.

In some embodiments, the processing module may be one module or may include multiple sub-modules. Optionally, the multiple submodules execute part or all of the steps required to be executed by the processing module. Optionally, the processing module and the processor may be used interchangeably.

In some embodiments, the second information includes first indication information indicating first CSI-RS resources, and the first CSI-RS resources include a first quantity of CSI-RS resources among the plurality of CSI-RS resources.

In some embodiments, a bitwidth of the first indication information is *Kₛ*, and *Kₛ* is a quantity of the plurality of CSI-RS resources.

In some embodiments, a bitwidth of the first indication information is $\left⌈{log}_{2}^{{C}_{{K}_{s}}^{M}}\right⌉$, *Kₛ* is a quantity of the plurality of CSI-RS resources, and M is the first quantity.

In some embodiments, the second information further includes second indication information indicating the first quantity.

In some embodiments, the transceiver module 5101 is further configured to receive third information sent from the network device, in which the third information indicates the first quantity.

In some embodiments, the second information includes third indication information, and the third indication information indicates a rank indicator (RI) corresponding to the first CSI-RS resources.

In some embodiments, a bitwidth of the third indication information is determined based on a second quantity, and the second quantity is a number of layers allowed by the network device for reporting.

In some embodiments, the first indication information includes a plurality of instances of fourth indication information, and different instances of fourth indication information indicate RIs corresponding to different CSI-RS resources in the first CSI-RS resources, respectively.

In some embodiments, the first indication information includes fifth indication information indicating a combination index of a first RI combination, and the first RI combination is a combination of RIs corresponding to the first CSI-RS resources.

In some embodiments, a bitwidth of the fifth indication information is determined based on a quantity of second RI combinations, the second RI combinations include a combination of first RIs corresponding to the first CSI-RS resources, and the first RIs each includes an RI that is less than or equal to a maximum RI corresponding to the first CSI-RS resources.

In some embodiments, the second information includes sixth indication information, and the sixth indication information indicates a layer indicator (LI) corresponding to the first CSI-RS resources.

In some embodiments, a bitwidth of the sixth indication information is determined based on a third quantity, and the third quantity is a number of layers that the terminal device is capable for reporting.

In some embodiments, the second information includes seventh indication information, and the seventh indication information indicates a channel quality indicator (CQI) corresponding to the first CSI-RS resources.

In some embodiments, the seventh indication information includes a plurality of instances of eighth indication information, and different instances of eighth indication information indicate wideband CQIs corresponding to different CSI-RS resources, respectively.

In some embodiments, the seventh indication information includes ninth indication information and tenth indication information, the ninth indication information indicates a reference wideband CQI, and the tenth indication information indicates a first differential amount. The first differential amount includes differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources. The second CSI-RS resources include CSI-RS resources in the first CSI-RS resources other than a reference CSI-RS resource.

In some embodiments, the reference wideband CQI is a wideband CQI corresponding to the reference CSI-RS resource, or an average value of second wideband CQIs corresponding to a plurality of CSI-RS resources in the first CSI-RS resources.

In some embodiments, the processing module 5102 is further configured to determine the reference CSI-RS resource according to a first rule, in which the first rule is specified by a protocol or indicated by the network device.

In some embodiments, the second information further includes eleventh indication information indicating a second differential amount, and the second differential amount includes, for each CSI-RS resource among the first CSI-RS resources, a differential amount between a sub-band CQI and a wideband CQI corresponding to the CSI-RS resource.

In some embodiments, the second information includes twelfth indication information, and the twelfth indication information indicates quantities of non-zero coefficients of a plurality of data transmission layers corresponding to the first CSI-RS resources.

In some embodiments, the twelfth indication information includes a plurality of instances of thirteenth indication information, and different instances of thirteenth indication information indicate quantities of non-zero coefficients of different data transmission layers corresponding to different CSI-RS resources, respectively.

In some embodiments, the twelfth indication information includes fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

In some embodiments, the first reference quantity is determined by:
determining the quantities of non-zero coefficients of the data transmission layer respectively corresponding to the CSI-RS resources in the first CSI-RS resources and obtaining a plurality of first quantities; and
determining the first reference quantity based on the plurality of first quantities.

In some embodiments, determining the first reference quantity based on the plurality of first quantities includes:
taking a maximum value among the plurality of first quantities as the first reference quantity;
taking a minimum value among the plurality of first quantities as the first reference quantity; or
taking an average value of the plurality of first quantities as the first reference quantity.

In some embodiments, a bitwidth of the fourteenth indication information and a bitwidth of the fifteenth indication information are determined based on a quantity of spatial domain basis vectors.

In some embodiments, the second information further includes sixteenth indication information, and the sixteenth indication information indicates a CSI-RS resource corresponding to the first reference quantity.

In some embodiments, a bitwidth of the sixteenth indication information is determined based on the quantity of the plurality of CSI-RS resources.

In some embodiments, the second information includes a plurality of instances of seventeenth indication information, and different instances of seventeenth indication information indicate quantities of non-zero coefficients of all data transmission layers corresponding to different CSI-RS resources, respectively.

In some embodiments, the twelfth indication information includes eighteenth indication information and nineteenth indication information, the eighteenth indication information indicates a second reference quantity corresponding to the plurality of data transmission layers, and the nineteenth indication information indicates differences between the second reference quantity and quantities of non-zero coefficients of all data transmission layers respectively corresponding to CSI-RS resources in the first CSI-RS resources.

In some embodiments, the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

In some embodiments, determining the second reference quantity based on the plurality of second quantities includes:
taking a maximum value among the plurality of second quantities as the second reference quantity;
taking a minimum value among the plurality of second quantities as the second reference quantity; or
taking an average value of the plurality of second quantities as the second reference quantity.

In some embodiments, a bitwidth of the eighteenth indication information and a bitwidth of the nineteenth indication information are determined based on a maximum quantity of non-zero coefficients allowed by all data transmission layers corresponding to the first CSI-RS resources.

In some embodiments, the second information further includes twentieth indication information, and the twentieth indication information indicates a CSI-RS resource corresponding to the second reference quantity.

In some embodiments, a bitwidth of the twentieth indication information is determined based on the quantity of the plurality of CSI-RS resources.

FIG. 5B is a schematic structural diagram of a network device according to an embodiment of the present disclosure. As shown in FIG. 5B, the network device 102 may include at least one of a transceiver module 5201 or a processing module 5202. In some embodiments, the transceiver module 5201 is configured to send the first information configured by the network device to a terminal device, in which the first information at least includes a plurality of channel state information reference signal (CSI-RS) resources, and the first information is used for the terminal device to perform measurement based on the plurality of CSI-RS resources and obtain a plurality of measurement results. The transceiver module 5201 is further configured to receive the second information reported by the terminal device, in which the second information indicates the plurality of measurement results. Optionally, the transceiver module 5201 may be configured to perform at least one of the communication steps such as sending and/or receiving performed by the network device 102 in any of the above methods (for example, step S2102, step S2103, but not limited thereto), and thus the description thereof is omitted herein.

In some embodiments, the transceiver module may include a sending module and/or a receiving module. The sending module and receiving module may be separate or integrated. Optionally, terms such as transceiver module and transceiver may be used interchangeably.

In some embodiments, the second information includes first indication information indicating first CSI-RS resources, and the first CSI-RS resources include a first quantity of CSI-RS resources among the plurality of CSI-RS resources.

In some embodiments, the second information includes third indication information, and the third indication information indicates a rank indicator (RI) corresponding to the first CSI-RS resources.

In some embodiments, the second information includes sixth indication information, and the sixth indication information indicates a layer indicator (LI) corresponding to the first CSI-RS resources.

In some embodiments, the second information includes seventh indication information, and the seventh indication information indicates a channel quality indicator (CQI) corresponding to the first CSI-RS resources.

In some embodiments, the second information includes twelfth indication information, and the twelfth indication information indicates quantities of non-zero coefficients of a plurality of data transmission layers corresponding to the first CSI-RS resources.

FIG. 6A is a block diagram illustrating a communication device 6100 according to embodiments of the present disclosure. The communication device 6100 may be a network device (e.g., an access network device, a core network device, etc.), or may be a terminal (e.g., a user equipment, etc.), or may be a chip, a chip system, or a processor supporting a first device to implement any of the above methods, or may be a chip, a chip system, or a processor supporting the terminal to implement any of the above methods. The communication device 6100 may be used to implement the method described in the above-mentioned method embodiments, for details, reference may be made to the description in the above-mentioned method embodiments.

As shown in FIG. 6A, the communication device 6100 includes one or more processors 6101. The processor 6101 may be a general-purpose processor or a special-purpose processor, for example, a baseband processor or a central processor. The baseband processor may be used to process communication protocols and communication data, and the central processor may be used to control the communication device (such as a base station, a baseband chip, an IoT device, an IoT device chip, a DU or a CU, etc.), execute programs, and process program data. The communication device 6100 is configured to perform any of the above methods.

In some embodiments, the communication device 6100 further includes one or more memories 6102 for storing instructions. Optionally, all or part of the memories 6102 may also be outside the communication device 6100.

In some embodiments, the communication device 6100 further includes one or more transceivers 6103. In a case where the communication device 6100 includes one or more transceivers 6103, communication steps (for example, step S2101 and step S2103, but not limited thereto) such as sending and receiving in the above methods are performed by the transceiver 6103, and at least one of other steps (for example, step S2102, but not limited thereto) is performed by the processor 6101.

In an optional embodiment, the transceiver may include a receiver and/or a transmitter, which may be separate or integrated. Optionally, terms such as transceiver, transceiver unit, transceiving machine, transceiver circuit and the like may be used interchangeably, and terms such as transmitter, transmitting unit, transmitting machine, transmitting circuit and the like may be used interchangeably, and terms such as receiver, receiving unit, receiving machine, receiving circuit and the like may be used interchangeably.

In some embodiments, the communication device 6100 may include one or more interface circuits. Optionally, the interface circuit is connected to the memory 6102. The interface circuit may be used to receive a signal from the memory 6102 or other devices, and may be used to send the signal to the memory 6102 or other devices. For example, the interface circuit may read the instructions stored in the memory 6102 and send the instructions to the processor 6101.

The communication device 6100 described in the above embodiments may be the first device or the IoT device, but the communication device 6100 in the present disclosure is not limited thereto. The structure of the communication device 6100 may not be limited to that shown in FIG. 6A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, an IoT device, an intelligent IoT device, a cellular phone, a wireless device, a handheld device, a mobile unit, an in-vehicle device, a first device, a cloud device, an artificial intelligence device, etc.; (6) others.

FIG. 6B is a block diagram illustrating a chip 6200 according to embodiments of the present disclosure. For the case where the communication device 6100 is a chip or a chip system, reference may be made to the block diagram of the chip 6200 shown in FIG. 6B, but the communication device 6100 is not limited thereto.

The chip 6200 includes one or more processors 6201, and the chip 6200 is configured to perform any of the above methods.

In some embodiments, the chip 6200 further includes one or more interface circuits 6203. Optionally, the interface circuit 6203 is connected to the memory 6202. The interface circuit 6203 may be configured to receive a signal from the memory 6202 or other devices, and the interface circuit 6203 may be configured to send the signal to the memory 6202 or other devices. For example, the interface circuit 6203 may read instructions stored in the memory 6202, and send the instructions to the processor 6201.

In some embodiments, the interface circuit 6203 is configured to perform at least one of communication steps such as sending and/or receiving in the above method (for example, step S2101 and step S2103, but not limited thereto). The processor 6201 is configured to perform at least one of other steps (for example, step S2102, but not limited thereto).

In some embodiments, terms such as interface circuit, interface, transceiver pin, and transceiver may be used interchangeably.

In some embodiments, the chip 6200 further includes one or more memories 6202 for storing instructions. Optionally, all or part of the memories 6202 may be outside the chip 6200.

The embodiments of the present disclosure further provide a storage medium having stored thereon instructions, which, when executed on the communication device 6100, cause the communication device 6100 to perform any of the above methods. Optionally, the storage medium is an electronic storage medium. Optionally, the storage medium is a computer-readable storage medium, but not limited thereto, and it may also be a storage medium readable by other devices. Optionally, the storage medium may be a non-transitory storage medium, but not limited thereto, and it may also be a transitory storage medium.

The embodiments of the present disclosure further provide a program product which, when executed by the communication device 6100, causes the communication device 6100 to perform any of the above methods. Optionally, the program product may be a computer program product.

The embodiments of the present disclosure further provide a computer program that, when run on a computer, causes the computer to perform any of the above methods.

## Claims

1. An information reporting method, performed by a terminal device, comprising:
receiving first information configured from a network device, wherein the first information at least comprises a plurality of channel state information reference signal (CSI-RS) resources;
performing measurement based on the plurality of CSI-RS resources and obtaining a plurality of measurement results; and
reporting second information to the network device, wherein the second information indicates the plurality of measurement results.

2. The method according to claim 1, wherein the second information comprises first indication information indicating first CSI-RS resources, and the first CSI-RS resources comprise a first quantity of CSI-RS resources among the plurality of CSI-RS resources.

3. The method according to claim 2, wherein a bitwidth of the first indication information is *Kₛ*, and *Kₛ* is a quantity of the plurality of CSI-RS resources.

4. The method according to claim 2, wherein a bitwidth of the first indication information is $\left⌈{log}_{2}^{{C}_{{K}_{s}}^{M}}\right⌉$, *Kₛ* is a quantity of the plurality of CSI-RS resources, and M is the first quantity.

5. The method according to claim 4, wherein the second information further comprises second indication information indicating the first quantity.

6. The method according to any one of claims 2 to 4, further comprising:
receiving third information sent from the network device, wherein the third information indicates the first quantity.

7. The method according to any one of claims 2 to 6, wherein the second information comprises third indication information, and the third indication information indicates a rank indicator (RI) corresponding to the first CSI-RS resources.

8. The method according to claim 7, wherein a bitwidth of the third indication information is determined based on a second quantity, and the second quantity is a number of layers allowed by the network device for reporting.

9. The method according to claim 7, wherein the first indication information comprises a plurality of instances of fourth indication information, and different instances of fourth indication information indicate RIs corresponding to different CSI-RS resources in the first CSI-RS resources, respectively.

10. The method according to claim 7, wherein the first indication information comprises fifth indication information indicating a combination index of a first RI combination, and the first RI combination is a combination of RIs corresponding to the first CSI-RS resources.

11. The method according to claim 10, wherein a bitwidth of the fifth indication information is determined based on a quantity of second RI combinations, the second RI combinations comprise a combination of first RIs corresponding to the first CSI-RS resources, and the first RIs each comprises an RI that is less than or equal to a maximum RI corresponding to the first CSI-RS resources.

12. The method according to any one of claims 2 to 11, wherein the second information comprises sixth indication information, and the sixth indication information indicates a layer indicator (LI) corresponding to the first CSI-RS resources.

13. The method according to claim 12, wherein a bitwidth of the sixth indication information is determined based on a third quantity, and the third quantity is a number of layers that the terminal device is capable for reporting.

14. The method according to any one of claims 2 to 13, wherein the second information comprises seventh indication information, and the seventh indication information indicates a channel quality indicator (CQI) corresponding to the first CSI-RS resources.

15. The method according to claim 14, wherein the seventh indication information comprises a plurality of instances of eighth indication information, and different instances of eighth indication information indicate wideband CQIs corresponding to different CSI-RS resources, respectively.

16. The method according to claim 14, wherein the seventh indication information comprises ninth indication information and tenth indication information, the ninth indication information indicates a reference wideband CQI, and the tenth indication information indicates a first differential amount;
the first differential amount comprises differential amounts between the reference wideband CQI and second wideband CQIs respectively corresponding to CSI-RS resources in second CSI-RS resources, or differential amounts between the reference wideband CQI and second wideband CQIs respectively corresponding to CSI-RS resources in the first CSI-RS resources, and
the second CSI-RS resources comprise CSI-RS resources in the first CSI-RS resources other than a reference CSI-RS resource.

17. The method according to claim 16, wherein the reference wideband CQI is:
a wideband CQI corresponding to the reference CSI-RS resource; or
an average value of second wideband CQIs corresponding to a plurality of CSI-RS resources in the first CSI-RS resources.

18. The method according to claim 17, further comprising:
determining the reference CSI-RS resource according to a first rule, wherein the first rule is specified by a protocol or indicated by the network device.

19. The method according to any one of claims 14 to 18, wherein the second information further comprises eleventh indication information indicating a second differential amount, and the second differential amount comprises, for each CSI-RS resource among the first CSI-RS resources, a differential amount between a sub-band CQI and a wideband CQI corresponding to the CSI-RS resource.

20. The method according to any one of claims 2 to 19, wherein the second information comprises twelfth indication information, and the twelfth indication information indicates quantities of non-zero coefficients of a plurality of data transmission layers corresponding to the first CSI-RS resources.

21. The method according to claim 20, wherein the twelfth indication information comprises a plurality of instances of thirteenth indication information, and different instances of thirteenth indication information indicate quantities of non-zero coefficients of different data transmission layers corresponding to different CSI-RS resources, respectively.

22. The method according to claim 20, wherein the twelfth indication information comprises fourteenth indication information and fifteenth indication information, the fourteenth indication information indicates a first reference quantity corresponding to each data transmission layer among the plurality of data transmission layers, and the fifteenth indication information indicates differences between the first reference quantity corresponding to the data transmission layer and quantities of non-zero coefficients of the data transmission layer respectively corresponding to CSI-RS resources in the first CSI-RS resources.

23. The method according to claim 22, wherein the first reference quantity is determined by:
determining the quantities of non-zero coefficients of the data transmission layer respectively corresponding to the CSI-RS resources in the first CSI-RS resources and obtaining a plurality of first quantities; and
determining the first reference quantity based on the plurality of first quantities.

24. The method according to claim 23, wherein determining the first reference quantity based on the plurality of first quantities comprises:
taking a maximum value among the plurality of first quantities as the first reference quantity;
taking a minimum value among the plurality of first quantities as the first reference quantity; or
taking an average value of the plurality of first quantities as the first reference quantity.

25. The method according to any one of claims 22 to 24, wherein a bitwidth of the fourteenth indication information and a bitwidth of the fifteenth indication information are determined based on a quantity of spatial domain basis vectors.

26. The method according to any one of claims 22 to 25, wherein the second information further comprises sixteenth indication information, and the sixteenth indication information indicates a CSI-RS resource corresponding to the first reference quantity.

27. The method according to claim 26, wherein a bitwidth of the sixteenth indication information is determined based on the quantity of the plurality of CSI-RS resources.

28. The method according to claim 20, wherein the second information comprises a plurality of instances of seventeenth indication information, and different instances of seventeenth indication information indicate quantities of non-zero coefficients of all data transmission layers corresponding to different CSI-RS resources, respectively.

29. The method according to claim 20, wherein the twelfth indication information comprises eighteenth indication information and nineteenth indication information, the eighteenth indication information indicates a second reference quantity corresponding to the plurality of data transmission layers, and the nineteenth indication information indicates differences between the second reference quantity and quantities of non-zero coefficients of all data transmission layers respectively corresponding to CSI-RS resources in the first CSI-RS resources.

30. The method according to claim 29, wherein the second reference quantity is determined by:
determining the quantities of non-zero coefficients of all data transmission layers respectively corresponding to the CSI-RS resources in the first CSI-RS resources and obtaining a plurality of second quantities; and
determining the second reference quantity based on the plurality of second quantities.

31. The method according to claim 30, wherein determining the second reference quantity based on the plurality of second quantities comprises:
taking a maximum value among the plurality of second quantities as the second reference quantity;
taking a minimum value among the plurality of second quantities as the second reference quantity; or
taking an average value of the plurality of second quantities as the second reference quantity.

32. The method according to any one of claims 29 to 31, wherein a bitwidth of the eighteenth indication information and a bitwidth of the nineteenth indication information are determined based on a maximum quantity of non-zero coefficients allowed by all data transmission layers corresponding to the first CSI-RS resources.

33. The method according to any one of claims 29 to 32, wherein the second information further comprises twentieth indication information, and the twentieth indication information indicates a CSI-RS resource corresponding to the second reference quantity.

34. The method according to claim 33, wherein a bitwidth of the twentieth indication information is determined based on the quantity of the plurality of CSI-RS resources.

35. An information reporting method, performed by a network device, comprising:
sending first information configured from the network device to a terminal device, wherein the first information at least comprises a plurality of channel state information reference signal (CSI-RS) resources; and the first information is used for the terminal device to perform measurement based on the plurality of CSI-RS resources and obtain a plurality of measurement results; and
receiving second information reported by the terminal device, wherein the second information indicates the plurality of measurement results.

36. The method according to claim 35, wherein the second information comprises first indication information indicating first CSI-RS resources, and the first CSI-RS resources comprise a first quantity of CSI-RS resources among the plurality of CSI-RS resources.

37. The method according to claim 36, wherein the second information comprises third indication information, and the third indication information indicates a rank indicator (RI) corresponding to the first CSI-RS resources.

38. The method according to claim 36 or 37, wherein the second information comprises sixth indication information, and the sixth indication information indicates a layer indicator (LI) corresponding to the first CSI-RS resources.

39. The method according to any one of claims 36 to 38, wherein the second information comprises seventh indication information, and the seventh indication information indicates a channel quality indicator (CQI) corresponding to the first CSI-RS resources.

40. The method according to any one of claims 36 to 39, wherein the second information comprises twelfth indication information, and the twelfth indication information indicates quantities of non-zero coefficients of a plurality of data transmission layers corresponding to the first CSI-RS resources.

41. A terminal device, comprising:
a transceiver module, configured to receive first information configured from a network device, wherein the first information at least comprises a plurality of channel state information reference signal (CSI-RS) resources; and
a processing module, configured to perform measurement based on the plurality of CSI-RS resources and obtain a plurality of measurement results;
wherein the transceiver module is further configured to report second information to the network device, and the second information indicates the plurality of measurement results.

42. A network device, comprising:
a transceiver module, configured to send first information configured from the network device to a terminal device, wherein
the first information at least comprises a plurality of channel state information reference signal (CSI-RS) resources; and the first information is used for the terminal device to perform measurement based on the plurality of CSI-RS resources and obtain a plurality of measurement results; and
the transceiver module is further configured to receive second information reported by the terminal device, and the second information indicates the plurality of measurement results.

43. A communication device, comprising:
one or more processors;
wherein, the communication device is configured to perform the information reporting method according to any one of claims 1 to 34 or claims 35 to 40.

44. A communication system, comprising a terminal device and a network device, wherein the terminal device is configured to implement the information reporting method according to any one of claims 1 to 34, and the network device is configured to implement the information reporting method according to any one of claims 35 to 40.

45. A storage medium having instructions stored thereon, wherein the instructions, when executed on a communication device, cause the communication device to perform the information reporting method according to any one of claims 1 to 34 or claims 35 to 40.
